(19) Europäisches Patentamt
European Patent Office
Office européen des brevets

(11) **EP 0 775 873 A1**

(12) **EUROPÄISCHE PATENTANMELDUNG**

(43) Veröffentlichungstag:
28.05.1997 Patentblatt 1997/22

(51) Int. Cl.6: **F24D 12/02**, F28C 3/06,
F24H 1/10, F24D 3/08

(21) Anmeldenummer: 96117406.7

(22) Anmeldetag: 30.10.1996

(84) Benannte Vertragsstaaten:
AT CH DE FR LI

(30) Priorität: 22.11.1995 DE 19543449

(71) Anmelder: DEUTSCHE FORSCHUNGSANSTALT
FÜR LUFT- UND RAUMFAHRT e.V.
53111 Bonn (DE)

(72) Erfinder:
• **Farago, Zoltan**
74747 Merchingen (DE)
• **Buschulte, Winfried, Prof. Dr.**
74196 Neuenstadt (DE)

(74) Vertreter: **Beck, Jürgen**
**Hoeger, Stellrecht & Partner**
**Uhlandstrasse 14c**
**70182 Stuttgart (DE)**

(54) **Verfahren und Vorrichtung zur Nutzung der restlichen fühlbaren und der latenten Wärme eines Abgases einer Feuerungsanlage**

(57) Um ein Verfahren zur Nutzung der restlichen fühlbaren und der latenten Wärme (Restwärme) eines Abgases einer Feuerungsanlage, bei dem das Abgas in einem Restwärmetauscher (44) Wärme an ein Kühlmedium abgibt und das Kühlmedium zumindest zeitweise durch einen Kühlmedium-Heizwasser-Wärmetauscher (96) geführt wird, in dem es Wärme an Heizwasser in einem Heizwasserkreislauf (152) abgibt, derart zu verbessern, daß ein im Vergleich zu herkömmlichen Verfahren größerer Anteil der Restwärme nutzbar wird, wird vorgeschlagen, daß Wärme aus dem im Restwärmetauscher (44) erwärmten Kühlmedium zumindest zeitweise an Brauchwasser in einer Brauchwasserzuführleitung (166) überführt wird.

FIG.1

**Beschreibung**

Die vorliegende Erfindung betrifft ein Verfahren zur Nutzung der restlichen fühlbaren und der latenten Wärme (Restwärme) eines Abgases einer Feuerungsanlage, bei dem das Abgas in einem Restwärmetauscher Wärme an ein Kühlmedium abgibt und das Kühlmedium zumindest zeitweise durch einen Kühlmedium-Heizwasser-Wärmetauscher geführt wird, in dem es Wärme an Heizwasser in einem Heizwasserkreislauf abgibt.

Ferner betrifft die vorliegende Erfindung eine Vorrichtung zur Nutzung der restlichen fühlbaren und der latenten Wärme (Restwärme) eines Abgases einer Feuerungsanlage, umfassend einen von dem Abgas zur Abgabe von Wärme von dem Abgas an ein Kühlmedium durchströmten Restwärmetauscher und einen Kühlmedium-Heizwasser-Wärmetauscher zur Abgabe von Wärme von dem Kühlmedium an Heizwasser in einem Heizwasserkreislauf.

Solche Verfahren und Vorrichtungen sind aus dem Stand der Technik bekannt.

Insbesondere ist es bekannt, den Kühlmedium-Heizwasser-Wärmetauscher in einer Heizwasserrücklaufleitung, in der das Heizwasser aus einer Heizkörperanordnung zum Kessel zurückläuft, anzuordnen. Der Betrag der dem Abgas der Feuerungsanlage entnehmbaren Restwärme ist hierbei jedoch durch die Temperatur des rücklaufenden Heizwassers, die bei Niedertemperaturheizungen zwischen 20° C und 45° C liegt, begrenzt.

Das Kühlmedium und somit auch das Abgas der Feuerungsanlage kann nicht auf eine geringere Temperatur als die des rücklaufenden Heizwassers gekühlt werden. Nach einer Abkühlung des Abgases auf die Temperatur des rücklaufenden Heizwassers kann dem Abgas keine weitere Restwärme entnommen werden.

Der vorliegenden Erfindung lag daher die Aufgabe zugrunde, ein Verfahren und eine Vorrichtung der eingangs genannten Art derart zu verbessern, daß ein gegenüber herkömmlichen Verfahren und Vorrichtungen größerer Anteil der Restwärme des Abgases genutzt werden kann.

Diese Aufgabe wird bei einem Verfahren mit den Merkmalen des Oberbegriffs von Anspruch 1 dadurch gelöst, daß Wärme aus dem im Restwärmetauscher erwärmten Kühlmedium zumindest zeitweise an Brauchwasser in einer Brauchwasserzuführleitung überführt wird.

Das erfindungsgemäße Konzept bietet den Vorteil, daß dem im Restwärmetauscher erwärmten Kühlmedium zusätzlich Wärme entzogen wird, so daß das Kühlmedium im Restwärmetauscher zusätzliche Restwärme aus dem Abgas der Feuerungsanlage aufnehmen kann. Da das üblicherweise aus der öffentlichen Trinkwasserversorgung der Brauchwasserzuführleitung zufließende Frischwasser in der Regel eine Temperatur von nur 5° C bis 8° C aufweist, kann das Kühlmedium auf Temperaturen abgekühlt werden, die wesentlich unter der Temperatur des rücklaufenden Heizwassers liegen. Folglich kann auch das Abgas im Restwärmetauscher auf deutlich tiefere Temperaturen als bei herkömmlichen Verfahren abgekühlt werden, was den Zugriff auf ein Restwärmepotential erlaubt, das bislang nicht genutzt werden konnte.

Ferner erlaubt das erfindungsgemäße Konzept eine Nutzung der Restwärme des Abgases der Feuerungsanlage auch während des Sommerbetriebs der Feuerungsanlage, bei dem der Heizwasserumlauf stillgelegt ist. Herkömmliche Verfahren zur Nutzung der Restwärme des Abgases der Feuerungsanlage, bei denen das Kühlmedium lediglich durch einen Kühlmedium-Heizwasser-Wärmetauscher geführt wird, sind während des Sommerbetriebes nicht anwendbar, so daß die Restwärmenutzung im Sommerbetrieb, in dem von der Feuerungsanlage nur Brauchwasser erwärmt wird, entfällt. Das Abgas der Feuerungsanlage wird daher bei herkömmlichen Verfahren im Sommerbetrieb an dem Restwärmetauscher vorbeigeleitet, indem eine Klappe in einem sogenannten Temperaturwechsler in eine Umleitstellung gebracht wird.

Beim erfindungsgemäßen Verfahren ist hingegen die Nutzung der Restwärme des Abgases der Feuerungsanlage auch im Sommerbetrieb möglich. Ein Umsteuern der Klappe im Temperaturwechsler ist daher nicht mehr erforderlich, so daß diese Klappe als starre Trennwand ausgelegt werden kann, wodurch eine Kosteneinsparung und eine geringere Störanfälligkeit erreicht werden.

Die Überführung der Wärme aus dem im Restwärmetauscher erwärmten Kühlmedium an das Brauchwasser in der Brauchwasserzuführleitung kann direkt oder indirekt erfolgen.

Ein direkter Wärmeübergang von dem Kühlmedium an das Brauchwasser wird erreicht, wenn das im Restwärmetauscher erwärmte Kühlmedium zumindest zeitweise durch einen Kühlmedium-Brauchwasser-Wärmetauscher geführt wird, in dem es Wärme an Brauchwasser in der Brauchwasserzuführleitung abgibt. Diese direkte Wärmeüberführung ist insbesondere dann von Vorteil, wenn die Feuerungsanlage das Brauchwasser nach dem Durchlauferhitzerverfahren erwärmt, da in diesem Fall die Zeiten, in denen die Feuerungsanlage zur Erwärmung des Brauchwassers in Betrieb ist, mit den Zeiten zusammenfallen, in denen der Kühlmedium-Brauchwasser-Wärmetauscher von Brauchwasser durchströmt wird, so daß also gerade dann, wenn das Kühlmedium im Restwärmetauscher durch das Abgas der Feuerungsanlage erwärmt wird, eine optimale Kühlung des Kühlmediums im Kühlmedium-Brauchwasser-Wärmetauscher gewährleistet ist.

Da die Temperatur des Brauchwassers bei Eintritt in den Kühlmedium-Brauchwasser-Wärmetauscher in der Regel deutlich tiefer liegt als die Temperatur des Heizwassers bei Eintritt in den Kühlmedium-Heizwasser-Wärmetauscher, ist es von Vorteil, wenn das Kühlmedium durch den Kühlmedium-Heizwasser-Wärmetauscher geführt wird, bevor es durch den Kühlmedium-Brauchwasser-Wärmetauscher geführt wird. So ist zumindest bei typischen Betriebsbedingungen gewährleistet, daß das Kühlmedium in beiden Wärmetauschern Wärme abgibt und nicht etwa zusätzlich aufgeheizt wird.

Die zur Erwärmung des Brauchwassers erforderliche Brennstoffmenge kann zumindest im Winterbetrieb verringert werden, wenn vorteilhafterweise das im Kühlmedium-Brauchwasser-Wärmetauscher erwärmte Brauchwasser durch einen Heizwasser-Brauchwasser-Wärmetauscher geführt wird, in dem das Heizwasser des Heizwasserkreislaufs Wärme an das Brauchwasser abgibt.

Ferner kann mittels eines solchen Heizwasser-Brauchwasser-Wärmetauschers die Temperatur des Heizwassers bei Eintritt in den Kühlmedium-Heizwasser-Wärmetauscher gesenkt werden, wenn das Heizwasser durch den Heizwasser-Brauchwasser-Wärmetauscher geführt wird, bevor es durch den Kühlmedium-Heizwasser-Wärmetauscher geführt wird. Durch die auf diese Weise bewirkte Erniedrigung der Temperatur des Heizwassers bei Eintritt in den Kühlmedium-Heizwasser-Wärmetauscher wird der Wärmeübergang vom Kühlmedium zum Heizwasser in diesem Wärmetauscher verbessert.

Da die Temperaturen von Kühlmedium, Heizwasser und Brauchwasser während des Betriebes stark schwanken können und es daher nicht stets zur optimalen Abkühlung des Kühlmediums und damit Restwärmenutzung führt, wenn das Kühlmedium sowohl den Kühlmedium-Heizwasser-Wärmetauscher als auch den Kühlmedium-Brauchwasser-Wärmetauscher durchläuft, ist bei einer bevorzugten Ausgestaltung des erfindungsgemäßen Verfahrens vorgesehen, daß ein Satz von Betriebszuständen in Abhängigkeit von einem Satz von Temperaturen, vom Vorliegen einer Brauchwasserentnahme und vom Bestehen eines Heizwasserumlaufs in dem Heizwasserkreislauf ermittelt wird und daß ein Strömungsweg des Kühlmediums in Abhängigkeit von dem ermittelten Betriebszustand ausgewählt wird. Die Auswahl des Strömungswegs des Kühlmediums ist dabei so zu treffen, daß das Kühlmedium in den von ihm durchströmten Wärmetauschern (mit Ausnahme des Restwärmetauschers, in dem es Wärme aus dem Abgas der Feuerungsanlage aufnimmt) möglichst viel Wärme abgibt und nicht etwa Wärme aufnimmt.

Zur Messung des Satzes von Temperaturen können Temperaturmesser und zur Ermittlung eines Betriebszustandes aus dem Satz von Betriebszuständen kann eine Steuereinheit verwendet werden, welche in Abhängigkeit vom Betriebszustand Ventile zur Auswahl des Kühlmedium-Strömungsweges schaltet.

Alternativ oder ergänzend dazu können auch Thermostatventile vorgesehen sein, die direkt in Abhängigkeit von einer oder mehreren Temperaturen verschiedene Zustände einnehmen und so den Kühlmedium-Strömungsweg auswählen.

Der genannte Satz von Temperaturen kann insbesondere die Temperatur des Kühlmediums bei Eintritt in den Restwärmetauscher, die Temperatur des Kühlmediums bei Verlassen des Restwärmetauschers, die Temperatur des Heizwassers bei Eintritt in den Kühlmedium-Heizwasser-Wärmetauscher und/oder die Temperatur des Brauchwassers bei Verlassen des Kühlmedium-Brauchwasser-Wärmetauschers umfassen.

Wenn das Brauchwasser durch die Feuerungsanlage nicht nach dem Durchlauferhitzerverfahren erwärmt wird, sondern von der Feuerungsanlage erwärmtes Brauchwasser in einem Vorratsspeicher gespeichert wird, ist eine Gleichzeitigkeit des Betriebs der Feuerungsanlage einerseits und des Vorhandenseins einer Brauchwasserströmung durch den Kühlmedium-Brauchwasser-Speicher andererseits nicht immer gewährleistet. Um auch bei fehlender Brauchwasserströmung durch den Kühlmedium-Brauchwasser-Wärmetauscher brauchwasserseitig eine ausreichend große Wärmekapazität zur Aufnahme von Wärme aus dem Kühlmedium zur Verfügung zu haben, wird der Kühlmedium-Brauchwasser-Wärmetauscher vorteilhafterweise als Kaltbrauchwasserspeicher (Kaltwasserspeicher) ausgebildet.

Ist der Kühlmedium-Brauchwasser-Wärmetauscher als Kaltbrauchwasserspeicher ausgebildet, so ist es günstig, wenn der Satz von Temperaturen die mittlere Temperatur des Brauchwassers in dem Kaltbrauchwasserspeicher umfaßt.

Günstig ist es, wenn der Satz von Betriebszuständen einen Betriebszustand A umfaßt, in dem das Kühlmedium im wesentlichen durch den Kühlmedium-Heizwasser-Wärmetauscher und durch den Kühlmedium-Brauchwasser-Wärmetauscher geführt wird.

Ein solcher Strömungsweg des Kühlmediums läßt sich in einfacher Weise dadurch realisieren, daß in dem Betriebszustand A Sperrventile in Umgehungsleitungen des Kühlmedium-Heizwasser-Wärmetauschers und des Kühlmedium-Brauchwasser-Wärmetauschers geschlossen sind, so daß das Kühlmedium nicht durch diese Umgehungsleitungen strömen kann.

Um zu gewährleisten, daß das Kühlmedium sowohl im Kühlmedium-Heizwasser-Wärmetauscher als auch im Kühlmedium-Brauchwasser-Wärmetauscher jeweils Wärme abgibt und nicht selbst erwärmt wird, ist vorteilhafterweise vorgesehen, daß der Betriebszustand A ausgewählt wird, wenn das Heizwasser im Heizwasserkreislauf umläuft (d.h. im Winterbetrieb), kein Brauchwasser entnommen wird und die Temperatur des Brauchwassers bei Verlassen des Kühlmedium-Brauchwasser-Wärmetauschers kleiner ist als oder gleich groß ist wie die Temperatur des Heizwassers bei Eintritt in den Kühlmedium-Heizwasser-Wärmetauscher oder wenn das Heizwasser im Heizwasserkreislauf umläuft (d.h. im Winterbetrieb), Brauchwasser entnommen wird und die Temperatur des Kühlmediums bei Verlassen des Restwärmetauschers größer ist als oder gleich groß ist wie die Temperatur des Heizwassers bei Eintritt in den Kühlmedium-Heizwasser-Wärmetauscher.

Wenn der Kühlmedium-Brauchwasser-Wärmetauscher als Kaltbrauchwasserspeicher ausgebildet ist, ist es entsprechend von Vorteil, wenn der Betriebszustand A ausgewählt wird, wenn das Heizwasser im Heizwasserkreislauf umläuft (d.h. im Winterbetrieb), kein Brauchwasser entnommen wird und die mittlere Temperatur des Brauchwassers in dem Brauchwasserspeicher kleiner ist als oder gleich groß ist wie die Temperatur des Heizwassers bei Eintritt in den Kühlmedium-Heizwasser-Wärmetauscher oder wenn das Heizwasser im Heizwasserkreislauf umläuft (d.h. im Winterbetrieb), Brauchwasser entnommen wird und die Temperatur des Kühlmediums bei Verlassen des Restwärmetauschers größer ist als oder gleich groß wie die Temperatur des Heizwassers bei Eintritt in den Kühlmedium-Heizwasser-Wärmetauscher.

Ferner ist es günstig, wenn der Satz von Betriebszuständen einen Betriebszustand B umfaßt, in dem das Kühlmedium im wesentlichen an dem Kühlmedium-Heizwasser-Wärmetauscher vorbeigeführt wird. So kann in der Regel eine Erwärmung des Kühlmediums durch das Heizwasser im Kühlmedium-Heizwasser-Wärmetauscher vermieden werden.

Ein solcher Strömungsweg des Kühlmediums läßt sich in einfacher Weise dadurch realisieren, daß in dem Betriebszustand B ein Sperrventil in einer Umgehungsleitung des Kühlmedium-Heizwasser-Wärmetauschers geöffnet ist. Aufgrund des größeren Strömungswiderstandes des Kühlmedium-Heizwasser-Wärmetauschers im Vergleich zu der Umgehungsleitung wird in diesem Fall der größte Teil des Kühlmediums unter Umgehung des Kühlmedium-Heizwasser-Wärmetauschers durch die Umgehungsleitung strömen, ohne daß dazu der Zugang zum Kühlmedium-Heizwasser-Wärmetauscher durch ein gesondertes Ventil geschlossen werden müßte.

Um eine optimale Abkühlung des Kühlmediums zu erreichen, wird der Betriebszustand B vorteilhafterweise dann ausgewählt, wenn das Heizwasser nicht im Heizwasserkreislauf umläuft (d.h. im Sommerbetrieb) oder wenn das Heizwasser im Heizwasserkreislauf umläuft (d.h. im Winterbetrieb), Brauchwasser entnommen wird und die Temperatur des Kühlmediums bei Verlassen des Restwärmetauschers kleiner ist als die Temperatur des Heizwassers bei Eintritt in den Kühlmedium-Heizwasser-Wärmetauscher.

Auch wenn der Kühlmedium-Brauchwasser-Wärmetauscher als Kaltbrauchwasserspeicher ausgebildet ist, ist es entsprechend von Vorteil, wenn der Betriebszustand B dann ausgewählt wird, wenn das Heizwasser nicht im Heizwasserkreislauf umläuft (d.h. im Sommerbetrieb) oder wenn das Heizwasser im Heizwasserkreislauf umläuft (d.h. im Winterbetrieb), Brauchwasser entnommen wird und die Temperatur des Kühlmediums bei Verlassen des Restwärmetauschers kleiner ist als die Temperatur des Heizwassers bei Eintritt in den Kühlmedium-Heizwasser-Wärmetauscher.

Schließlich ist es günstig, wenn der Satz von Betriebszuständen einen Betriebszustand C umfaßt, in dem das Kühlmedium im wesentlichen an dem Kühlmedium-Brauchwasser-Wärmetauscher vorbeigeführt wird. So läßt sich auch unter ungünstigen Betriebsbedingungen vermeiden, daß das Kühlmedium in dem Kühlmedium-Brauchwasser-Wärmetauscher durch das Brauchwasser erwärmt wird, statt Wärme an dasselbe abzugeben.

Dieser Strömungsweg läßt sich in einfacher Weise dadurch realisieren, daß in dem Betriebszustand C ein Sperrventil in einer Umgehungsleitung des Kühlmedium-Brauchwasser-Wärmetauschers geöffnet ist. Aufgrund des größeren Strömungswiderstandes des Kühlmedium-Brauchwasser-Wärmetauschers im Vergleich zu der Umgehungsleitung wird in diesem Fall der größte Teil des Kühlmediums unter Umgehung des Kühlmedium-Brauchwasser-Wärmetauschers durch die Umgehungsleitung strömen, ohne daß dazu der Zugang zum Kühlmedium-Brauchwasser-Wärmetauscher durch ein gesondertes Ventil geschlossen werden müßte.

Um eine optimale Abkühlung des Kühlmediums zu gewährleisten, wird vorteilhafterweise der Betriebszustand C dann ausgewählt, wenn das Heizwasser im Heizwasserkreislauf umläuft (d.h. im Winterbetrieb), kein Brauchwasser entnommen wird und die Temperatur des Brauchwassers bei Verlassen des Kühlmedium-Brauchwasser-Wärmetauschers größer ist als die Temperatur des Heizwassers bei Eintritt in den Kühlmedium-Heizwasser-Wärmetauscher.

Wenn der Kühlmedium-Brauchwasser-Wärmetauscher als Kaltbrauchwasserspeicher ausgebildet ist, so ist es entsprechend von Vorteil, wenn der Betriebszustand C dann ausgewählt wird, wenn das Heizwasser im Heizwasserkreislauf umläuft (d.h. im Winterbetrieb), kein Brauchwasser entnommen wird und die mittlere Temperatur des Brauchwassers in dem Brauchwasserspeicher größer ist als die Temperatur des Heizwassers bei Eintritt in den Kühlmedium-Heizwasser-Wärmetauscher.

Bei einer besonders bevorzugten Ausgestaltung des erfindungsgemäßen Verfahrens ist vorgesehen, daß der Satz von Betriebszuständen die vorstehend genannten Betriebszustände A, B und C umfaßt.

Alternativ oder ergänzend zu der direkten Überführung von Wärme aus dem Kühlmedium an das Brauchwasser mittels eines Kühlmedium-Brauchwasser-Wärmetauschers kann auch eine indirekte Überführung der Wärme aus dem Kühlmedium an das Brauchwasser vorgesehen sein, wobei das Kühlmedium durch einen Kühlmedium-Heizwasser-Brauchwasser-Doppelwärmetauscher geführt wird, in dem das im Restwärmetauscher erwärmte Kühlmedium Wärme an Heizwasser in dem Heizwasserkreislauf abgibt, welches wiederum Wärme an Brauchwasser in der Brauchwasserzuführleitung abgibt.

Im Vergleich zu der Verwendung eines Kühlmedium-Heizwasser-Wärmetauschers und eines Heizwasser-Brauchwasser-Wärmetauschers ergibt sich durch die Verwendung eines Kühlmedium-Heizwasser-Brauchwasser-Doppelwärmetauschers eine Einsparung von Einzelkomponenten und von benötigten Zwischenleitungen.

Günstig ist es, wenn in dem Kühlmedium-Heizwasser-Brauchwasser-Doppelwärmetauscher ein von einer Kühlmedium-Heizwasser-Wärmeübergangsfläche zu einer Heizwasser-Brauchwasser-Wärmeübergangsfläche weisender Temperaturgradient in dem Heizwasser erzeugt wird, das Heizwasser an der Kühlmedium-Heizwasser-Wärmeübergangsfläche also eine niedrigere Temperatur aufweist als das Heizwasser an der Heizwasser-Brauchwasser-Wärmeübergangsfläche. Dadurch wird erreicht, daß die Temperaturgefälle von dem Kühlmedium zu dem Heizwasser an der Kühlmedium-Heizwasser-Wärmeübergangsfläche einerseits und von dem Heizwasser zu dem Brauchwasser an der Heizwasser-Brauchwasser-Wärmeübergangsfläche andererseits stets möglichst groß sind, um einen effizienten Wärmeübergang zu ermöglichen. Der Wärmeübergang von dem Kühlmedium zum Heizwasserkreislauf bzw. vom Heizwasserkreislauf zur Brauchwasserzuführleitung wird daher durch kurzzeitige Schwankungen in den Kühlmedium-, Heizwasser- oder Brauchwassertemperaturen, die aufgrund des diskontinuierlichen Betriebs der Feuerungsanlage verursacht werden können, nur unwesentlich beeinträchtigt.

Ferner ist es, sofern die Wärmekapazität des in dem Kühlmedium-Heizwasser-Brauchwasser-Doppelwärmetauscher enthaltenen Heizwassers genügend groß ist, möglich, eine optimale Restwärmenutzung auch dann zu erreichen, wenn die Betriebsphasen der Feuerungsanlage, während derer das Kühlmedium im Restwärmetauscher Wärme aus dem Abgas der Feuerungsanlage aufnimmt, nur kurz sind.

Bei einer bevorzugten Ausgestaltung des Doppelwärmetauschers ist vorgesehen, daß in dem Kühlmedium-Heizwasser-Brauchwasser-Doppelwärmetauscher eine vertikale Temperaturschichtung in dem zwischen der Kühlmedium-Heizwasser-Wärmeübergangsfläche und der Heizwasser-Brauchwasser-Wärmeübergangsfläche angeordneten Heizwasser erzeugt wird. Eine solche vertikale Temperaturschichtung wird durch die temperaturabhängige Dichte des Heizwassers bei geeigneter Geometrie des Doppelwärmetauschers und bei Ausschluß von Störungen erhalten, wenn die Kühlmedium-Heizwasser-Wärmeübergangsfläche unterhalb der Heizwasser-Brauchwasser-Wärmeübergangsfläche angeordnet ist.

Um den im Heizwasser des Doppelwärmetauschers erzeugten Temperaturgradienten nicht durch eine Strömung von in den Doppelwärmetauscher eintretendem Heizwasser zu stören, ist vorteilhafterweise vorgesehen, daß in den Kühlmedium-Heizwasser-Brauchwasser-Doppelwärmetauscher eintretendem Heizwasser Impuls mittels eines Prallblechs entzogen wird.

Grundsätzlich kommen beliebige Kühlmedien und Ausgestaltungen von Restwärmetauschern für die Durchführung des erfindungsgemäßen Verfahrens in Betracht.

Vorzugsweise wird jedoch als Kühlmedium in dem Restwärmetauscher aus dem Abgas der Feuerungsanlage kondensiertes Kondensat verwendet. In diesem Fall kann einer der weiter unten detailliert beschriebenen Restwärmetauscher verwendet werden, bei denen frei durch den Restwärmetauscher fallende Kondensatstrahlen erzeugt werden, die entweder gar nicht oder in ein monodisperses Kondensatspray zerfallen.

Ein monodisperses Kondensatspray wird in diesem Zusammenhang mit Hilfe des Tropfengrößenspektrums wie folgt definiert:

Es sei $d_{0,05}$ der Tropfendurchmesser, für den gilt, daß alle Tropfen des Kondensatsprays, deren Durchmesser kleiner ist als dieser Durchmesser, zusammen 5% des Flüssigkeitsvolumens des Sprays beinhalten.

Ferner sei $d_{0,95}$ der Tropfendurchmesser, für den gilt, daß alle Tropfen des Kondensatsprays, deren Durchmesser größer ist als dieser Durchmesser, zusammen 5% des Flüssigkeitsvolumens des Sprays beinhalten.

Dann soll ein Kondensatspray als monodispers gelten, wenn das Verhältnis des Durchmessers $d_{0,95}$ zu dem Durchmesser $d_{0,05}$ kleiner ist als ungefähr 1,2.

Bei einer Vorrichtung zur Nutzung der Restwärme eines Abgases einer Feuerungsanlage mit den Merkmalen des Oberbegriffs von Anspruch 28 wird die der Erfindung zugrundeliegende Aufgabe dadurch gelöst, daß die Vorrichtung eine Brauchwasserzuführleitung und eine Einrichtung zur Übertragung von Wärme von dem Kühlmedium auf Brauchwasser in der Brauchwasserzuführleitung umfaßt.

Die erfindungsgemäße Vorrichtung bietet somit die bereits im Zusammenhang mit dem erfindungsgemäßen Verfahren nach Anspruch 1 angegebenen Vorteile.

Bevorzugte Ausgestaltungen der erfindungsgemäßen Vorrichtung sind Gegenstand der Ansprüche 29 bis 54, deren Vorteile ebenfalls bereits im Zusammenhang mit den bevorzugten Ausgestaltungen des erfindungsgemäßen Verfahrens gemäß den Ansprüchen 2 bis 27 erläutert wurden.

Weitere Merkmale und Vorteile der Erfindung sind Gegenstand der nachfolgenden Beschreibung und zeichnerischen Darstellung von Ausführungsbeispielen.

In der Zeichnung zeigen:

Fig. 1          eine schematische Gesamtdarstellung einer ersten Ausführungsform der erfindungsgemäßen Vorrichtung zur Nutzung der Restwärme eines Abgases einer Feuerungsanlage;

Fig. 2          eine schematische Darstellung eines Restwärmetauschers der ersten Ausführungsform der erfindungsgemäßen Vorrichtung, bei der frei fallende Kondensatstrahlen in ein monodisperses Kondensatspray zerfallen;

Fig. 3 bis 6 jeweils einen Längsschnitt durch eine in einer Düsenplatte des Restwärmetauschers der ersten Ausführungsform der erfindungsgemäßen Vorrichtung verwendbare Düsenbohrung;

Fig. 7 einen Rayleigh-Zerfall eines frei fallenden Kondensatstrahls in ein monodisperses Kondensatspray bei einer kleinen Zerfallslänge;

Fig. 8 einen Rayleigh-Zerfall eines frei fallenden Kondensatstrahls in ein monodisperses Kondensatspray bei einer gegenüber der Fig. 7 größeren Zerfallslänge;

Fig. 9 einen unerwünschten Membran-Zerfall eines frei fallenden Kondensatstrahls in ein Kondensatspray mit breitem Tropfengrößenspektrum;

Fig. 10 einen unerwünschten Fiber-Zerfall eines frei fallenden Kondensatstrahls in ein Kondensatspray mit breitem Tropfengrößenspektrum;

Fig. 11 einen schematischen Schnitt durch einen Restwärmetauscher einer zweiten Ausführungsform der erfindungsgemäßen Vorrichtung zur Nutzung der Restwärme eines Abgases einer Feuerungsanlage, in dem nicht zerfallende, frei fallende Kondensatstrahlen erzeugt werden;

Fig. 12 die Erzeugung eines nicht zerfallenden, frei fallenden Kondensatstrahls mittels einer kurzen, scharfkantigen Düsenbohrung;

Fig. 13 einen teilweisen Zerfall eines frei fallenden Kondensatstrahls in ein Kondensatspray mit breitem Tropfengrößenspektrum infolge von Kavitation in einer Düsenbohrung;

Fig. 14 einen schematischen Schnitt durch einen Restwärmetauscher einer dritten Ausführungsform der erfindungsgemäßen Vorrichtung zur Nutzung der Restwärme eines Abgases einer Feuerungsanlage, in dem ein monodisperses Kondensatspray und ein zusätzliches Verdampfungs-Kondensatspray im Bereich einer Abgaszufuhr durch Versprühen aus einer Zerstäuberdüse erzeugt werden;

Fig. 15 einen schematischen Schnitt durch einen Restwärmetauscher einer vierten Ausführungsform der erfindungsgemäßen Vorrichtung zur Nutzung der Restwärme eines Abgases einer Feuerungsanlage, in dem ein monodisperses Kondensatspray und mittels einer Zerstäubungsplatte ein zusätzliches Verdampfungs-Kondensatspray im Bereich einer Abgaszufuhr erzeugt werden, wobei ein in der Zerstäubungsplatte vorgesehener Durchlaß für das Kondensat geöffnet ist;

Fig. 16 einen schematischen Schnitt durch den Restwärmetauscher aus Fig. 15, wobei der Durchlaß für das Kondensat in der Zerstäubungsplatte geschlossen ist;

Fig. 17a bis 17d schematische Schnitte durch den unteren Bereich des Restwärmetauschers aus Fig. 15, wobei die Zerstäubungsplatte der Fig. 15 jeweils durch eine Anordnung mehrerer Zerstäubungsplatten ersetzt ist;

Fig. 18 eine schematische Gesamtdarstellung einer fünften Ausführungsform einer erfindungsgemäßen Vorrichtung zur Nutzung der Restwärme eines Abgases einer Feuerungsanlage, die einen Kondensat-Heizwasser-Brauchwasser-Doppelwärmetauscher umfaßt; und

Fig. 19 einen schematischen Schnitt durch den Doppelwärmetauscher aus Fig. 18.

Gleiche oder funktional äquivalente Elemente sind in allen Figuren mit denselben Bezugszeichen bezeichnet.

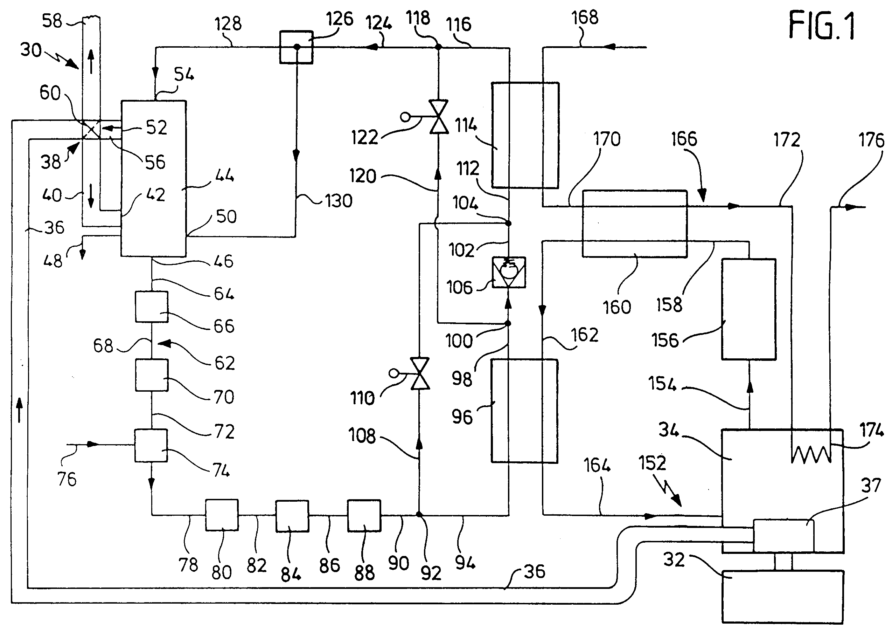

Eine in Fig. 1 insgesamt schematisch dargestellte und als Ganzes mit 30 bezeichnete erste Ausführungsform einer erfindungsgemäßen Vorrichtung zur Nutzung der Restwärme eines Abgases einer Feuerungsanlage umfaßt als Feuerungsanlage einen Brenner 32, der mit einem Heizwasserkessel 34 zur Erhitzung von in letzterem enthaltenem Heizwasser verbunden ist.

Der Brenner 32 kann mit beliebigen flüssigen und festen Brennstoffen, beispielsweise mit Heizöl, Erdgas oder Braunkohle, betrieben sein.

Eine Abgasleitung 36 für das bei dem Verbrennungsprozeß im Brenner 32 entstehende heiße Abgas führt von dem Brenner 32 durch einen Feuerraum 37 des Heizkessels 34 zu einem Temperaturwechsler 38, der als vierarmiges Rohrkreuz ausgebildet ist, wobei jeweils einer der Arme nach oben bzw. nach unten und zwei weitere Arme in horizontale Richtungen weisen. Die Abgasleitung 36 ist an einen der horizontal ausgerichteten Arme des Temperaturwechslers 38 angeschlossen.

An den nach unten weisenden Arm des Temperaturwechslers 38 ist ein Abgaszuführrohr 40 angeschlossen, das an seinem anderen Ende an einem Abgaseintritt 42 in einen unteren Bereich eines Restwärmetauschers 44 mündet.

Der Restwärmetauscher 44 wird weiter unten detailliert beschrieben werden. Er weist beispielsweise die Form eines aufrechtstehenden, an Ober- und Unterseite geschlossenen Hohlzylinders auf und ist in seinem unteren Bereich außer mit dem Abgaseintritt 42 mit einem Kondensataustritt 46, einem oberhalb desselben angeordneten Kondensatüberlauf 48 sowie einem zwischen dem Kondensataustritt 46 und dem Kondensatüberlauf 48 angeordneten unteren Kondensateintritt 50 versehen.

Ferner weist der Restwärmetauscher 44 in seinem oberen Bereich einen Abgasaustritt 52 sowie einen oberhalb desselben angeordneten oberen Kondensateintritt 54 auf.

Der Abgasaustritt 52 ist über ein Abgasabführrohr 56 mit dem der Abgasleitung 36 gegenüberliegenden horizontal ausgerichteten Arm des Temperaturwechslers 38 verbunden.

An den nach oben weisenden Arm des Temperaturwechslers 38 ist ein Schornsteinzuführrohr 58 angeschlossen, das zu einem (nicht dargestellten) Schornstein führt.

Der Temperaturwechsler 38 weist in einem zentralen Bereich, in dem die vier Rohrarme zusammentreffen, eine zwischen einer Durchleit- und einer Umleitstellung schwenkbare Umlenkplatte 60 auf.

In der in Fig. 1 durchgezogen dargestellten Durchleitstellung der Umlenkplatte 60 sind die Abgasleitung 36 und das Abgaszuführrohr 40 miteinander verbunden, jedoch gegenüber dem Abgasabführrohr 56 und dem Schornsteinzuführrohr 58 abgeschlossen. Andererseits sind in dieser Durchleitstellung auch das Abgasabführrohr 56 und das Schornsteinzuführrohr 58 miteinander verbunden.

Daher kann in der Durchleitstellung der Umlenkplatte 60 vom Brenner 32 durch die Abgasleitung 36 zum Temperaturwechsler 38 geführtes heißes Abgas durch das Abgaszuführrohr 40 in den Restwärmetauscher 44 gelangen, in dem es auf noch zu besprechende Weise gekühlt und gereinigt wird, worauf es den Restwärmetauscher 44 durch das Abgasabführrohr 56 wieder verläßt und schließlich in das Schornsteinzuführrohr 58 entweicht.

In der in Fig. 1 gebrochen dargestellten Umleitstellung der Umlenkplatte 60 sind dagegen die Abgasleitung 36 und das Schornsteinzuführrohr 58 miteinander verbunden und gegenüber dem Abgaszuführrohr 40 und dem Abgasabführrohr 56 abgeschlossen, so daß in dieser Stellung der Umlenkplatte 60 das heiße, vom Brenner 32 kommende Abgas direkt aus der Abgasleitung 36 in das Schornsteinzuführrohr 58 entweicht, ohne zuvor in den Restwärmetauscher 44 zu gelangen.

Der Restwärmetauscher 44 ist Bestandteil eines als Ganzes mit 62 bezeichneten Kondensatkreislaufs. Die Strömungsrichtung des Kondensats durch den Kondensatkreislauf 62 ist in Fig. 1 mittels Pfeilspitzen angegeben.

Der Kondensataustritt 46 des Restwärmetauschers 44 ist über eine Kondensatleitung 64 mit einem Neutralisator 66 verbunden, der der Neutralisierung saurer Kondensatkomponenten dient und zu diesem Zweck beispielsweise mit Hydrolit gefüllt ist, welches einen MgO-Gehalt von ungefähr 75% aufweist und als weitere Bestandteile Wasser, Kohlendioxid sowie Spuren von Kalzium-, Eisen-, Aluminium- und Siliziumoxid umfaßt. Der Neutralisator 66 ist vorzugsweise so an den Kondensatkreislauf 62 angeschlossen, daß er von oben nach unten von dem Kondensat durchströmt wird.

Von dem Neutralisator 66 führt eine weitere Kondensatleitung 68 zu einem Kondensatfilter 70, das eine Maschenweite von beispielsweise weniger als 100 μm aufweist.

Das Kondensatfilter 70 kann auch im Neutralisator 66 integriert sein, wobei dann die Kondensatleitung 68 entfällt.

Von dem Kondensatfilter 70 führt eine weitere Kondensatleitung 72 zu einem Luftinjektor 74.

Der Luftinjektor 74 dient der Oxidation von in dem Kondensat gelösten Sulfit-Ionen zu ungiftigen Sulfat-Ionen mittels Luft, die dem Luftinjektor 74 über eine an denselben angeschlossene Luftzuführleitung 76 zugeführt wird.

Der Luftinjektor 74 ist innerhalb des Kondensatkreislaufs 62 in Strömungsrichtung hinter dem Neutralisator 66 angeordnet, um eine Luftsiphonbildung im Neutralisator 66 durch im Luftinjektor 74 injizierte Oxidationsluft zu vermeiden.

Der Luftinjektor 74 ist über eine Kondensatleitung 78 mit einem saugseitigen Eingang einer Kondensatpumpe 80 verbunden, die der Erzeugung einer kontinuierlichen Kondensatströmung durch den Kondensatkreislauf 62 dient.

Von einem druckseitigen Ausgang der Kondensatpumpe 80 führt eine Kondensatleitung 82 zu einem Durchflußmesser 84, der der Bestimmung des Kondensatflusses im Kondensatkreislauf 62 dient.

Von dem Durchflußmesser 84 führt eine weitere Kondensatleitung 86 zu einem Druckmesser 88, der der Bestimmung des Druckes des durchströmenden Kondensates dient.

Von dem Druckmesser 88 führt eine weitere Kondensatleitung 90 zu einem Eingang einer ersten Verzweigung 92 des Kondensatkreislaufs 62.

Ein erster Ausgang der ersten Verzweigung 92 führt über eine Kondensatleitung 94 zu einem Kondensat-Eingang eines Kondensat-Heizwasser-Wärmetauschers 96.

Ein Kondensat-Ausgang des Kondensat-Heizwasser-Wärmetauschers 96 ist über eine weitere Kondensatleitung 98 mit einem Eingang einer zweiten Verzweigung 100 des Kondensatkreislaufs 62 verbunden.

Von einem ersten Ausgang der zweiten Verzweigung 100 führt eine Kondensatleitung 102 zu einem ersten Eingang einer ersten Zusammenführung 104 des Kondensatkreislaufs, wobei die Kondensatleitung 102 mit einem Rückschlagventil 106 versehen ist, das Kondensat nur in der Richtung von der zweiten Verzweigung 100 zu der ersten Zusammenführung 104 hin passieren läßt.

Von einem zweiten Ausgang der ersten Verzweigung 92 des Kondensatkreislaufs 62 führt eine erste Umgehungsleitung 108 zu einem zweiten Eingang der ersten Zusammenführung 104, wobei die erste Umgehungsleitung 108 mit einem ersten Sperrventil 110 versehen ist, durch das die erste Umgehungsleitung 108 geöffnet oder geschlossen werden kann.

Von einem Ausgang der ersten Zusammenführung 104 führt eine weitere Kondensatleitung 112 zu einem Kondensat-Eingang eines Kondensat-Brauchwasser-Wärmetauschers 114.

Von einem Kondensat-Ausgang des Kondensat-Brauchwasser-Wärmetauschers 114 führt eine Kondensatleitung 116 zu einem ersten Eingang einer zweiten Zusammenführung 118 des Kondensatkreislaufs 62.

Ein zweiter Ausgang der zweiten Verzweigung 100 des Kondensatkreislaufs 62 ist über eine zweite Umgehungsleitung 120, die ein zweites Sperrventil 122 aufweist, durch das die zweite Umgehungsleitung 120 geöffnet oder geschlossen werden kann, mit einem zweiten Eingang der zweiten Zusammenführung 118 verbunden.

Von einem Ausgang der zweiten Zusammenführung 118 des Kondensatkreislaufs 62 führt eine weitere Kondensatleitung 124 zu einem Eingang eines magnetisch betätigten Dreiwegeventils 126, dessen Eingang wahlweise mit einem von zwei Ausgängen verbunden werden kann.

Von einem ersten Ausgang des Dreiwegeventils 126 führt eine Kondensatleitung 128 zu dem oberen Kondensateintritt 54 des Restwärmetauschers 44.

Von dem zweiten Ausgang des Dreiwegeventils 126 führt eine weitere Kondensatleitung 130 zu dem unteren Kondensateintritt 50 des Restwärmetauschers 44.

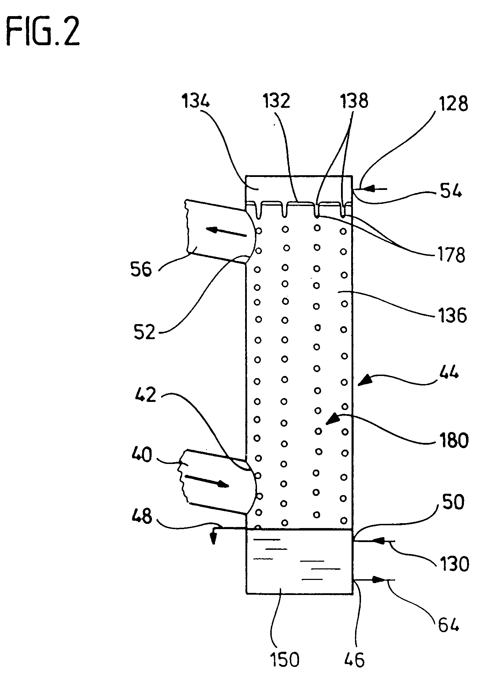

Der Restwärmetauscher 44 der ersten Ausführungsform der erfindungsgemäßen Vorrichtung ist ein Monodispers-Kondensatspray-Wärmetauscher, der in Fig. 2 schematisch dargestellt ist.

Der Monodispers-Kondensatspray-Wärmetauscher 44 umfaßt eine horizontal angeordnete zylindrische Düsenplatte 132, die den zylindrischen Innenraum des Kondensatspray-Wärmetauschers 44 in eine oberhalb der Düsenplatte 132 angeordnete Düsenvorkammer 134 und einen unterhalb der Düsenplatte 132 angeordneten Wärmetauscherraum 136 teilt.

Die Düsenplatte 132 wird in vertikaler Richtung von mehreren Düsenbohrungen 138 durchsetzt.

Die Mittelachsen einander benachbarter Düsenbohrungen 138 weisen einen Abstand voneinander auf, der vorzugsweise dem 15- bis 20-fachen des Durchmessers der Auslaßöffnung einer Düsenbohrung 138 entspricht.

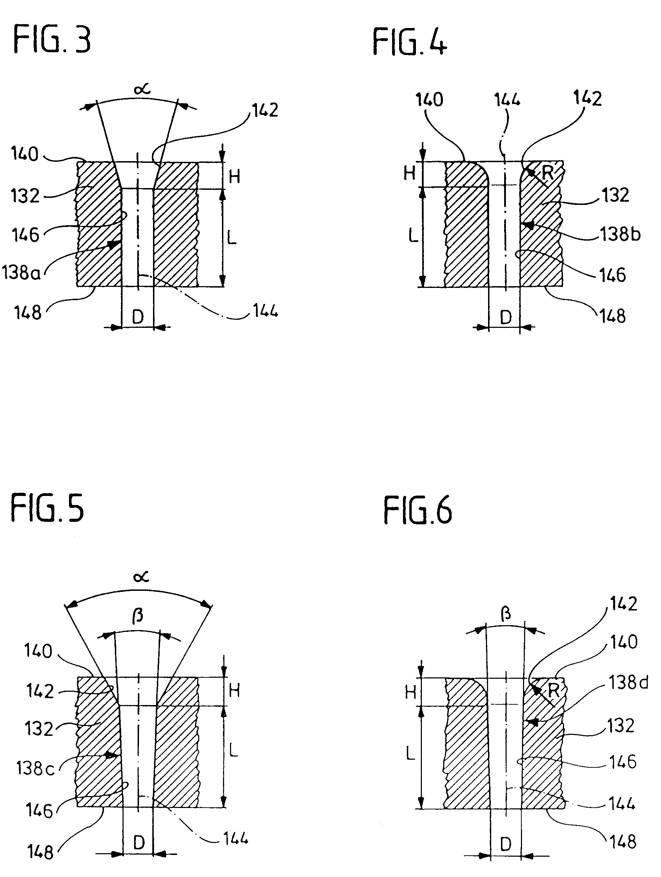

Eine in Fig. 3 dargestellte erste Ausführungsform 138a einer solchen Düsenbohrung 138 weist einen auf einer Oberseite 140 der Düsenplatte 132 mündenden Einlauf 142 in Form eines sich nach oben hin erweiternden Kegelstumpfes mit vertikaler Achse 144, Öffnungswinkel $\alpha$ und Länge H auf.

Der Einlauf 142 mündet an seiner Unterseite in einen zylindrischen, zu dem Einlauf 142 koaxialen Düsenkanal 146 mit der Länge L, dessen Durchmesser D dem kleinsten Durchmesser des kegelstumpfförmigen Einlaufs 142 entspricht und der auf einer Unterseite 148 der Düsenplatte 132 mündet.

Um zu erreichen, daß ein aus der Düsenbohrung 138a austretender Kondensatstrahl in ein monodisperses Kondensatspray zerfällt, werden vorzugsweise der Öffnungswinkel $\alpha$ kleiner als ungefähr 60°, die Länge H des Einlaufs 142 größer oder ungefähr gleich dem Durchmesser D des Düsenkanals 146 und die Länge L des Düsenkanals 146 größer als der ungefähr dreifache und kleiner als der ungefähr fünffache Durchmesser D des Düsenkanals 146 gewählt.

Eine in Fig. 4 dargestellte und als Ganzes mit 138b bezeichnete, alternative zweite Ausführungsform einer Düsenbohrung 138 in der Düsenplatte 132 unterscheidet sich von der in Fig. 3 dargestellten ersten Ausführungsform lediglich dadurch, daß der Einlauf 142 nicht durch die Mantelfläche eines Kegelstumpfs, sondern durch einen Ausschnitt aus der Mantelfläche eines Kreistorus mit Radius R begrenzt wird. Im übrigen stimmt die zweite Ausführungsform der Fig. 4 mit der in Fig. 3 dargestellten Ausführungsform überein.

Um zu erreichen, daß ein aus der Düsenbohrung 138b austretender Kondensatstrahl in ein monodisperses Kondensatspray zerfällt, wird der Radius R vorzugsweise größer oder ungefähr gleich dem Durchmesser des Düsenkanals 146 gewählt.

Eine in Fig. 5 dargestellte und als Ganzes mit 138c bezeichnete, alternative dritte Ausführungsform einer Düsenbohrung 138 in der Düsenplatte 132 unterscheidet sich von der in Fig. 3 dargestellten ersten Ausführungsform lediglich dadurch, daß der Düsenkanal 146 nicht zylindrisch ist, sondern die Form eines sich nach oben hin erweiternden Kegelstumpfes mit dem Öffnungswinkel $\beta$ und der Länge L aufweist. Dabei stimmt der kleinste Durchmesser des kegelstumpfförmigen Einlaufs 142 mit dem größten Durchmesser des kegelstumpfförmigen Düsenkanals 146 überein und ist größer als der Mündungsdurchmesser D der Düsenbohrung 138c.

Im übrigen stimmt die dritte Ausführungsform 138c mit der in Fig. 3 dargestellten ersten Ausführungsform 138a überein.

Um zu erreichen, daß ein aus der Düsenbohrung 138c austretender Kondensatstrahl in ein monodisperses Kondensatspray zerfällt, werden vorzugsweise der Öffnungswinkel α kleiner als ungefähr 60°, der Öffnungswinkel β kleiner als ungefähr 10°, die Länge H des Einlaufs 142 größer als ungefähr 1/5 des Mündungsdurchmessers D und die Länge L des Düsenkanals 146 größer als ungefähr das dreifache des Mündungsdurchmessers D gewählt.

Eine in Fig. 6 dargestellte und als Ganzes mit 138d bezeichnete, alternative vierte Ausführungsform einer Düsenbohrung 138 in der Düsenplatte 132 unterscheidet sich von der in Fig. 5 dargestellten dritten Ausführungsform 138c lediglich dadurch, daß die Begrenzungsfläche des Einlaufs 142 nicht die Mantelfläche eines Kegelstumpfes, sondern ein Ausschnitt aus der Mantelfläche eines Kreistorus vom Radius R ist.

Im übrigen stimmt die vierte Ausführungsform 138d mit der dritten Ausführungsform 138c überein.

Um zu erreichen, daß ein aus der Düsenbohrung 138d austretender Kondensatstrahl in ein monodisperses Kondensatspray zerfällt, werden vorzugsweise der Öffnungswinkel β kleiner als ungefähr 10°, der Radius R größer als ungefähr 1/5 des Mündungsdurchmessers D und die Länge L des Düsenkanals 146 größer als ungefähr das dreifache des Mündungsdurchmessers D gewählt.

Wie in Fig. 2 zu sehen, mündet die Kondensatleitung 128 oberhalb der Düsenplatte 132 durch die Seitenwand des Restwärmetauschers 44 an dem oberen Kondensateintritt 54 in die Düsenvorkammer 134.

Im unteren Bereich des Restwärmetauschers 44 mündet der Kondensatüberlauf 48 durch die Seitenwand des Restwärmetauschers 44 in den Wärmetauscherraum 136. Der Raum vom Boden des Wärmetauscherraums 136 bis zur Höhe der Mündungsöffnung des Kondensatüberlaufs 48 ist mit Kondensat gefüllt, das einen Kondensatsumpf 150 bildet.

In diesen Kondensatsumpf mündet nahe des Bodens des Wärmetauscherraums 136 die Kondensatleitung 64 durch die Seitenwand des Restwärmetauschers 44 an dem Kondensataustritt 46.

Oberhalb des Kondensataustritts 46 mündet die Kondensatleitung 130 durch die Seitenwand des Restwärmetauschers 44 an dem unteren Kondensateintritt 50 in den Kondensatsumpf 150.

Wie in Fig. 1 zu sehen ist, umfaßt die erfindungsgemäße Vorrichtung 30 außer dem Kondensatkreislauf 62 einen Heizwasserkreislauf 152, zu dem der von dem Brenner 32 beheizte Heizwasserkessel 34 zählt.

Ein Ausgang des Heizwasserkessels 34 ist über eine Heizwasservorlaufleitung 154 mit einer Heizkörperanordnung 156 verbunden, die beispielsweise der Wärmeabgabe an die Luft von Innenräumen dient.

Von der Heizkörperanordnung 156 führt eine Heizwasserleitung 158 zu einem Heizwasser-Eingang eines Heizwasser-Brauchwasser-Wärmetauschers 160.

Ein Heizwasser-Ausgang des Heizwasser-Brauchwasser-Wärmetauschers 160 ist über eine weitere Heizwasserleitung 162 mit einem Heizwasser-Eingang des Kondensat-Heizwasser-Wärmetauschers 96 verbunden. Das Heizwasser durchströmt den Kondensat-Heizwasser-Wärmetauscher 96 nach dem Gegenstromprinzip in einer der Strömungsrichtung des Kondensats entgegengesetzten Richtung.

Von einem Heizwasser-Ausgang des Kondensat-Heizwasser-Wärmetauschers 96 führt eine Heizwasser-Rücklaufleitung 164 zu einem Eingang des Heizwasserkessels 34.

Ferner umfaßt die erste Ausführungsform der erfindungsgemäßen Vorrichtung 30 eine als Ganzes mit 166 bezeichnete Brauchwasserzuführleitung, zu der eine Brauchwasserleitung 168 zählt, die von einer (nicht dargestellten) Frischwasserquelle, beispielsweise dem öffentlichen Trinkwassernetz, zu einem Brauchwasser-Eingang des Kondensat-Brauchwasser-Wärmetauschers 114 führt.

Das Brauchwasser durchströmt den Kondensat-Brauchwasser-Wärmetauscher 114 nach dem Gegenstromprinzip in einer zu der Strömungsrichtung des Kondensats entgegengesetzten Richtung.

Von einem Brauchwasser-Ausgang des Kondensat-Brauchwasser-Wärmetauschers 114 führt eine weitere Brauchwasserleitung 170 zu einem Brauchwasser-Eingang des Heizwasser-Brauchwasser-Wärmetauschers 160.

Das Brauchwasser durchströmt den Heizwasser-Brauchwasser-Wärmetauscher 160 nach dem Gegenstromprinzip in einer zu der Strömungsrichtung des Heizwassers entgegengesetzten Richtung.

Von einem Brauchwasser-Ausgang des Heizwasser-Brauchwasser-Wärmetauschers 160 führt eine Brauchwasserleitung 172 zu einem Eingang einer innerhalb des Heizwasserkessels 34 angeordneten Wärmetauscherschlange 174, die der Erwärmung des Brauchwassers durch das im Heizwasserkessel 34 befindliche Heizwasser nach dem Durchlauferhitzerverfahren dient.

Von einem Ausgang der Wärmetauscherschlange 174 schließlich führt eine weitere Brauchwasserleitung 176 zu (nicht dargestellten) Brauchwasserentnahmestellen, wie beispielsweise einem Warmwasserhahn.

Alternativ zu einer Erwärmung des Brauchwassers im Durchlauferhitzerverfahren kann auch vorgesehen sein, daß das Brauchwasser durch die Brauchwasserleitung 172 in einen (nicht dargestellten) Warmbrauchwasserspeicher gelangt, in dem eine Wärmetauscherschlange angeordnet ist, welche von Heizwasser aus dem Heizwasserkessel 34 durchströmt wird, so daß das im Warmbrauchwasserspeicher befindliche Brauchwasser erwärmt wird. Von einem Ausgang des Warmbrauchwasserspeichers führt eine weitere Brauchwasserleitung zu den Brauchwasserentnahmestellen.

Die vorstehend beschriebene erste Ausführungsform der erfindungsgemäßen Vorrichtung 30 funktioniert im Winterbetrieb, also bei bestehendem Heizwasserumlauf im Heizwasserkreislauf 152, wie folgt:

Heizwasser aus dem Heizwasserkessel 34 gelangt durch die Heizwasser-Vorlaufleitung 154 in die Heizkörperanordnung 156, gibt beim Durchlaufen derselben Wärme ab und kehrt durch die Heizwasserleitung 158, den Heizwasser-Brauchwasser-Wärmetauscher 160, die Heizwasserleitung 162, den Kondensat-Heizwasser-Wärmetauscher 96 und die Heizwasser-Rücklaufleitung 164 in den Heizwasserkessel 34 zurück.

Da das Heizwasser durch das Durchlaufen des Heizwasserkreislaufes 152 Wärme verliert, nimmt die Durchschnittstemperatur des Heizwasserkessels 34 ab, bis sie unter eine Einschalttemperatur des Brenners 32 absinkt, bei der der Brenner 32 in Betrieb genommen wird, um das Heizwasser im Heizwasserkessel 34 wieder zu erwärmen. Erreicht das Wasser im Heizwasserkessel 34 eine Ausschalttemperatur des Brenners 32, so wird der Brenner 32 wieder abgeschaltet.

Außer durch die im wesentlichen kontinuierliche Wärmeentnahme durch den Heizwasserkreislauf 52 kann ein Absinken der Temperatur im Heizwasserkessel 34 auch durch eine während jeweils kurzer Zeitintervalle, die in unregelmäßigen Abständen aufeinanderfolgen, erfolgende Entnahme von Brauchwasser aus der Brauchwasserzuführleitung 166 bewirkt werden, da das Brauchwasser beim Durchströmen der Wärmetauscherschlange 174 dem Heizwasser im Heizwasserkessel 34 Wärme entzieht.

Während der Betriebsphasen des Brenners 32 entsteht durch Verbrennung des Brennstoffes (Öl, Kohle, Gas) im Brenner 32 ein Abgas, das durch die Abgasleitung 36 zum Temperaturwechsler 38 strömt.

In Perioden relativ häufigen Brennerbetriebs, also in der Regel während des Winterbetriebs, befindet sich die Umlenkplatte 60 des Temperaturwechslers 38 in der Durchleitstellung, so daß sie das von der Abgasleitung 36 her kommende Abgas durch das Abgaszuführrohr 40 zum Abgaseintritt 42 des Restwärmetauschers 44 lenkt.

Die Strömungsrichtung des Abgases ist in den Fig. 1 und 2 durch Pfeile angegeben.

Zu Beginn jeder Betriebsphase des Brenners 32 wird auch die Kondensatpumpe im Kondensatkreislauf 62 in Betrieb genommen, wobei sich das Dreiwegeventil 126 in einer Stellung befindet, in der es die Kondensatleitung 124 mit der Kondensatleitung 128 verbindet und die Kondensatleitung 130 vom Kondensatkreislauf 62 abgetrennt ist.

Infolgedessen strömt das Kondensat von der Kondensatleitung 124 durch die Kondensatleitung 128 und den oberen Kondensateintritt 54 in die Düsenvorkammer 134 des Restwärmetauschers 44.

Von dort wird das Kondensat unter einem geringen Überdruck von beispielsweise 0,1 bar durch die Düsenbohrungen 138 in der Düsenplatte 132 in den Wärmetauscherraum 136 gepreßt.

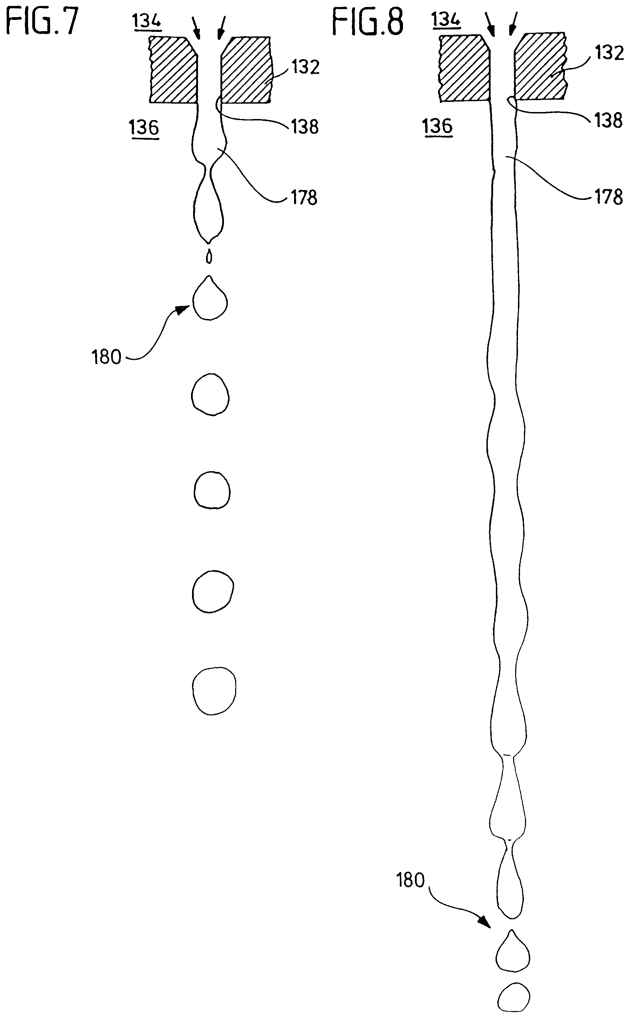

Wie in den Fig. 7 bis 10 dargestellt, tritt aus jeder der Düsenbohrungen 138 ein frei durch den Wärmetauscherraum 136 fallender Kondensatstrahl 178 aus, der nach Durchfallen einer Zerfallslänge in die Tropfen eines Kondensatsprays 180 zerfällt.

Der Zerfall eines Kondensatstrahls 178 mit rundem Querschnitt erfolgt nach einem der folgenden Zerfallsmechanismen: Rayleigh-Zerfall, Membran-Zerfall oder Fiber-Zerfall.

In Fig. 7 ist ein Rayleigh-Zerfall eines Kondensatstrahls 178 mit kurzer Zerfallslänge dargestellt. Beim Rayleigh-Zerfall entsteht aus dem Kondensatstrahl 178 eine monodisperse Tropfenkette, wobei der Durchmesser jeden Tropfens ungefähr das Doppelte des ursprünglichen Strahldurchmessers beträgt.

Der Rayleigh-Zerfall führt also zur Bildung eines monodispersen Kondensatsprays 180.

Um nach dem Durchströmen der vorstehend beschriebenen Düsenbohrungen 138a bis 138d einen Rayleigh-Zerfall zu erhalten, wird die Strömungsgeschwindigkeit des Kondensats durch die Düsenkanäle 146 mittels der Kondensatpumpe 80 so eingestellt, daß die Reynolds-Zahl der Kondensatströmung an den Mündungsöffnungen der Düsenkanäle 146 kleiner ist als ungefähr 5.000, vorzugsweise kleiner als ungefähr 2.500, und größer ist als ungefähr 100, vorzugsweise größer als ungefähr 500. Dabei ist die Reynolds-Zahl Re definiert als

$$Re = u \, D/\nu,$$

wobei u die Strömungsgeschwindigkeit des Kondensats an den Mündungsöffnungen der Düsenbohrungen 138, D den Durchmesser der Mündungsöffnungen der Düsenbohrungen 138 und $\nu$ die kinematische Viskosität des Kondensats bezeichnet. Die Strömungsgeschwindigkeit des Kondensats an den Mündungsöffnungen der Düsenbohrungen 138 entspricht dem Verhältnis aus dem Kondensat-Volumenstrom im Kondensatkreislauf 62 und der Gesamtfläche der Mündungsöffnungen aller Düsenbohrungen 138 der Düsenplatte 132.

Damit die durch den Rayleigh-Zerfall des Kondensatstrahls 178 entstandenen Kondensattropfen stabil bleiben und nicht ihrerseits weiter zerfallen, wird die Relativgeschwindigkeit zwischen den fallenden Tropfen und der dieselbe umgebenden Gasatmosphäre im Wärmetauscherraum 136 so eingestellt, daß die Weberzahl der Tropfen kleiner ist als 10, vorzugsweise kleiner als 5, insbesondere kleiner als 2. Dabei ist die Weberzahl We definiert als

$$We = u_r^{\,2} \, d \, \rho/\sigma,$$

wobei $u_r$ die Relativgeschwindigkeit zwischen den Tropfen und der umgebenden Gasatmosphäre, d den Tropfendurchmesser (d ungefähr gleich 2D), $\rho$ die Kondensatdichte in den Tropfen und $\sigma$ die Oberflächen-

spannung des Kondensats bezeichnet.

Wird, wie in Fig. 2 dargestellt, der Abgasstrom in entgegengesetzter Richtung zum Kondensatstrom durch den Restwärmetauscher 44 geführt, so entspricht die Relativgeschwindigkeit $u_r$ der Summe aus der Fallgeschwindigkeit der Kondensattropfen und der Strömungsgeschwindigkeit des Abgases im Restwärmetauscher 44, wobei letztere umgekehrt proportional zur Querschnittsfläche des Wärmetauscherraums 136 und damit im wesentlichen durch die Dimensionierung des Restwärmetauschers 44 vorgegeben ist.

In Fig. 8 ist ebenfalls ein Rayleigh-Zerfall eines Kondensatstrahls 178 in ein monodisperses Kondensatspray 180 dargestellt, jedoch mit größerer Zerfallslänge als in Fig. 7.

Durch die größere Zerfallslänge ist zwar die Kondensatoberfläche im Wärmetauscherraum 136 reduziert, so daß zum Austausch einer vorgegebenen Wärmemenge zwischen dem Abgas und dem Kondensat ein höherer Wärmetauscherraum 136 benötigt wird; dafür sinkt aber, insbesondere im oberen Bereich des Wärmetauscherraums 136, wo der Abgasaustritt 52 angeordnet ist, die Gefahr, daß Kondensattröpfchen vom Abgasstrom mitgerissen und aus dem Restwärmetauscher 44 hinausgetragen werden.

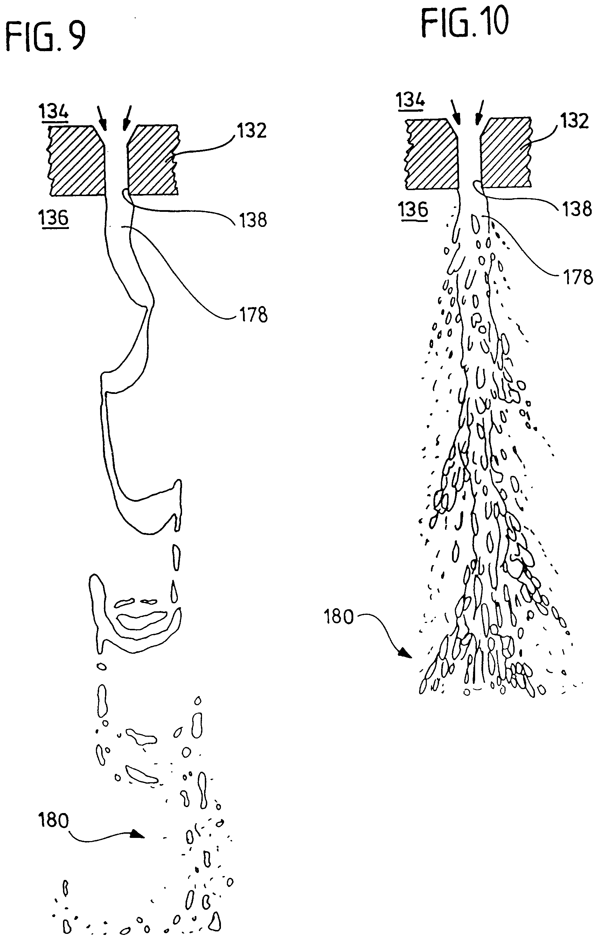

In Fig. 9 ist ein unerwünschter Membran-Zerfall eines Kondensatstrahls 178 dargestellt.

Bei diesem Zerfallsmechanismus zerfällt der Kondensatstrahl 178 in ein Kondensatspray 180 mit sehr breitem Tropfengrößenspektrum. Ein breites Tropfengrößenspektrum ist von Nachteil, da es zum einen kleine Tröpfchen umfaßt, die vom Abgasstrom mitgerissen und aus dem Restwärmetauscher hinausgetragen werden, falls kein zusätzlicher nachgeschalteter Tropfenabscheider vorgesehen ist. Zum anderen umfaßt das Kondensatspray 180 mit breitem Tropfengrößenspektrum auch relativ große Tropfen oder Filamente, die nur eine geringe spezifische Oberfläche und damit eine kleine spezifische Wärmeaustauschfläche aufweisen.

Ferner wird beim Membran-Zerfallsmechanismus ein großer Anteil der kinetischen Energie der Kondensatströmung dissipiert, so daß eine höhere Pumpenleistung erforderlich ist.

Zum Membran-Zerfall des Kondensatstrahls 178 kann es kommen, wenn die Reynolds- oder die Weberzahl außerhalb des vorstehend genannten Bereiches liegen, oder bei ungünstiger Form der Düsenbohrungen 138, bei zu rauhen Bohrungswänden oder bei zu schwacher Haftung des Kondensats an den Wänden der Düsenbohrungen 138.

In Fig. 10 ist ein ebenfalls unerwünschter Fiber-Zerfall eines Kondensatstrahls 178 dargestellt.

Auch beim Fiber-Zerfall zerfällt der Kondensatstrahl 178 in ein Kondensatspray 180 mit breitem Tropfengrößenspektrum, das die bereits im Zusammenhang mit dem Membran-Zerfall genannten Nachteile aufweist und ebenfalls eine höhere Pumpenleistung erfordert.

Der Fiber-Zerfall kann ebenso wie der Membran-Zerfall dann auftreten, wenn der vorstehend genannte günstige Bereich der Reynolds- oder Weberzahlen verlassen wird oder die Düsenbohrungen 138 ungünstig geformt sind, die Wände der Düsenbohrungen 138 zu rauh sind oder das Kondensat zu schwach an den Wänden der Düsenbohrungen 138 haftet.

Das im Wärmetauscherraum 136 des Restwärmetauschers 44 gebildete monodisperse Kondensatspray bietet nicht nur eine große Wärmetauscherfläche für den Wärmeübergang von dem heißen Abgas aus dem Abgaszuführrohr 40 in das Kondensat, sondern auch eine hohe Wärmeübergangszahl aufgrund der Nutzung der latenten Wärme des im Abgas enthaltenen Wasserdampfs.

Unmittelbar nach Eintritt des heißen Abgases aus dem Abgaszuführrohr 40 durch den Abgaseintritt 42 in den knapp oberhalb des Kondensatsumpfes 150 liegenden Bereich des Wärmetauscherraums 136 kommt das Abgas mit den Tropfen des monodispersen Kondensatsprays 180 in Kontakt, verdampft dieses zumindest teilweise und wird dabei rasch abgekühlt. Dabei wandelt sich die fühlbare Abgaswärme in latente Wärme um.

Der durch partielle Verdampfung des Kondensatsprays 180 gebildete Wasserdampf strömt zusammen mit dem abgekühlten Abgas und dem darin bereits enthaltenen Wasserdampf gegen die Fallrichtung des Kondensatsprays 180 im Wärmetauscherraum 138 nach oben, wobei sich das Abgas weiter abkühlt, so daß im oberen, der Düsenplatte 132 benachbarten Bereich des Wärmetauscherraums 136 der im Abgas mitgeführte Wasserdampf an den Tropfen des Kondensatsprays 180 kondensiert, wobei der zirkulierende Kondensatmassenstrom die im Dampf enthaltene latente Wärme aufnimmt.

Die Menge des im oberen Bereich des Wärmetauscherraums 136 kondensierenden Wasserdampfes ist größer als die Menge des im unteren Bereich des Wärmetauscherraumes 136 verdampften Kondensats, so daß im Ergebnis der mit dem Abgas in den Restwärmetauscher 44 gelangte Wasserdampf zumindest teilweise kondensiert und dabei latente Wärme an den Kondensatmassenstrom im Kondensatkreislauf 62 abgibt.

Da das Kondensat demnach fühlbare und latente Wärme aus dem Abgasstrom aufnimmt, wirkt es als Kühlmedium für das Abgas des Brenners 32.

Die im Kondensatsumpf 150 am Boden des Wärmetauscherraums 136 eintreffende Kondensatmenge ist geringfügig größer als die durch die Düsenplatte 132 in den Wärmetauscherraum 136 eintretende Kondensatmenge. Typischerweise entspricht die pro Zeiteinheit im Wärmetauscherraum 136 aus dem Abgas zusätzlich kondensierte Kondensatmenge ungefähr einem Tausendstel bis zu einem Hundertstel der pro Zeiteinheit in den Wärmetauscherraum 136 durch die Düsenplatte 132 eintretenden Kondensatmenge, deren Masse wiederum vorzugsweise das ungefähr 10- bis 100-fache der Masse des pro Zeiteinheit in den Wärmetauscherraum 136 eintretenden Abgases beträgt.

Die durchschnittliche Tropfengröße des monodispersen Kondensatsprays 180 ist in Abhängigkeit von der Strömungsgeschwindigkeit des Abgases im Wärmetauscherraum 136 so gewählt, daß die Tropfen nicht durch den Abgasstrom aus dem Wärmetauscherraum 136 durch den Abgasaustritt 52 mitgerissen werden.

Das Abgas wird im Restwärmetauscher 44 nicht nur abgekühlt und getrocknet, sondern auch gereinigt, da im Abgas mitgeführte Schadstoffe im Kondensatstrom gelöst werden. Insbesondere wird bei Verwendung schwefelhaltiger Brennstoffe im Brenner 32 entstehendes $SO_2$ so aus dem Abgas ausgewaschen.

Das im Restwärmetauscher 44 abgekühlte Abgas gelangt durch das Abgasabführrohr 56 zum Temperaturwechsler 38, wo es durch die in der Durchleitstellung befindliche Umlenkplatte 60 in das Schornsteinzuführrohr 58 umgelenkt wird, so daß es schließlich durch den (nicht dargestellten) Schornstein in die Atmosphäre entweichen kann.

Im Temperaturwechsler 38 findet ein mäßiger Wärmeübergang von dem durch die Abgasleitung 36 eintretenden heißen Abgasstrom zu dem durch das Abgasabführrohr 56 eintretenden abgekühlten Abgasstrom statt, aufgrund dessen das abgekühlte Abgas über seinen Taupunkt hinaus erwärmt wird, also bei Austritt aus dem Temperaturwechsler 38 in das Schornsteinzuführrohr 58 trocken ("überhitzt") ist, so daß im Schornstein keine Kondensation stattfindet, die zu einer Korrosion des Schornsteins führen könnte.

Bei geeigneter Auslegung des Restwärmetauschers 44 kann erreicht werden, daß die Temperatur des aus dem Wärmetauscherraum 136 austretenden Abgases bereits oberhalb der Taupunkttemperatur desselben liegt, so daß auf den Temperaturwechsler 38 verzichtet werden und das Abgas direkt aus der Abgasleitung 36 in den Restwärmetauscher 44 und aus demselben direkt in das Schornsteinzuführrohr 58 geleitet werden kann.

Die Tropfen des Kondensatsprays 180 gelangen nach Durchfallen des Wärmetauscherraums 136 in den Kondensatsumpf 150.

Wird der Kondensatkreislauf 62 nach einer längeren Betriebspause des Brenners 32 wieder in Betrieb genommen, so wird der Flüssigkeitspegel des Kondensatsumpfes 150 in der Regel durch Verdunstung unter seinen Maximalstand abgesunken sein. Durch die Bildung zusätzlichen Kondensates aus dem Abgasstrom steigt dann der Pegel des Kondensatsumpfes 150 während des Brennerbetriebes wieder an, bis er seinen Maximalstand erreicht und überschüssiges Kondensat durch den Kondensatüberlauf 48 abfließt.

Um Startschwierigkeiten beim Ingangsetzen der Kondensatströmung durch den Kondensatkreislauf 62 nach einer Betriebspause zu vermeiden, beträgt das Kondensatvolumen in den unterhalb des Kondensatüberlaufs 48 angeordneten Teilen des Kondensatkreislaufs mindestens das Fünffache, vorzugsweise mindestens das Zehnfache, des Kondensatvolumens in den oberhalb desselben angeordneten Teilen des Kondensatkreislaufs 62.

Aus dem Kondensatsumpf 150 gelangt das im Kondensatkreislauf 62 umlaufende Kondensat zunächst in den Neutralisator 66, in dem durch Zugabe von Neutralisationsmitteln (beispielsweise Hydrolit) ein pH-Wert des Kondensats zwischen ungefähr 6 und ungefähr 7 eingestellt wird.

Dies ist insbesondere bei der Verwendung von schwefelhaltigen Brennstoffen im Brenner 32 von Vorteil, da das heiße Abgas in diesem Fall $SO_2$ enthält, das sich im Kondensat löst und dieses sauer und äußerst korrosiv macht. Saures Kondensat würde den Restwärmetauscher 44 und die übrigen Bestandteile des Kondensatkreislaufs 62 korrodieren und überdies von metallischen Spurenelementen herrührende Metalloxidkomponenten aus dem Abgas lösen, was zu einer hohen Metallkonzentration im Kondensat und zu einer Zerstörung des Restwärmetauschers 44 führen könnte.

Das neutralisierte Kondensat wird im Kondensatfilter 70 gefiltert und gelangt in den Luftinjektor 74, wo ihm durch die Luftzuführleitung 76 ein Luftstrom zugeführt wird, durch den gegebenenfalls im Kondensat gelöste Sulfit-Ionen zu ungiftigen Sulfat-Ionen oxidiert werden.

Vom Luftinjektor 74 gelangt das Kondensat in die Kondensatpumpe 80, die den Kondensatumlauf im Kondensatkreislauf 62 aufrechterhält, und weiter durch den Durchflußmesser 84 und den Druckmesser 88, die der Überwachung des Betriebszustandes des Kondensatkreislaufs 62 und gegebenenfalls der Regelung der Kondensatpumpe 80 dienen, zu der ersten Verzweigung 92.

Der weitere Strömungsweg des Kondensats im Kondensatkreislauf 62 ab der ersten Verzweigung 92 hängt vom jeweiligen Betriebszustand der Vorrichtung 30 ab, der durch die Temperatur $T_{Ko1}$ des umlaufenden Kondensates beim Verlassen des Kondensatsumpfes 150, die Temperatur $T_{rück}$ des Heizwassers im Heizwasserkreislauf 152 beim Eintritt in den Kondensat-Heizwasser-Wärmetauscher 96, die Temperatur $T_{brauch}$ des Brauchwassers in der Brauchwasserzuführleitung 166 beim Verlassen des Kondensat-Brauchwasser-Wärmetauschers 114, das Vorliegen einer Brauchwasserentnahme und das Bestehen eines Heizwasserumlaufs in dem Heizwasserkreislauf 152 bestimmt ist.

Die Temperatur $T_{Ko1}$ wird an einer beliebigen Stelle des Kondensatkreislaufs 62 zwischen dem Kondensataustritt 46 aus dem Restwärmetauscher 44 und der ersten Verzweigung 92 gemessen.

Die Temperatur $T_{rück}$ wird in der Heizwasser-Leitung 162 zwischen dem Heizwasser-Ausgang des Heizwasser-Brauchwasser-Wärmetauschers 160 und dem Heizwasser-Eingang des Kondensat-Heizwasser-Wärmetauschers 96 gemessen.

Die Temperatur $T_{brauch}$ wird in der Brauchwasserleitung 170 zwischen dem Brauchwasser-Ausgang des Kondensat-Brauchwasser-Wärmetauschers 114 und dem Brauchwasser-Eingang des Heizwasser-Brauchwasser-Wärmetauschers 160 gemessen.

Das Vorliegen einer Brauchwasserentnahme wird mittels eines in der Brauchwasserzuführleitung 166, vorzugsweise in der Brauchwasserleitung 176 angeordneten (nicht dargestellten) Sensors detektiert, der beispielsweise auf eine Strömung durch die Brauchwasserzuführleitung 166 oder auf einen Druckabfall in derselben anspricht.

Anhand der Temperaturen $T_{Ko1}$, $T_{Ko2}$, $T_{rück}$ und $T_{brauch}$ und des Vorliegens einer Brauchwasserentnahme werden drei Betriebszustände A, B und C im Winterbetrieb, also bei bestehendem Heizwasserumlauf in dem Heizwasserkreislauf 152, wie folgt definiert:

Betriebszustand A liegt vor, wenn kein Brauchwasser entnommen wird und die Temperatur $T_{brauch}$ kleiner ist als oder gleich groß ist wie die Temperatur $T_{rück}$ oder wenn Brauchwasser entnommen wird und die Temperatur $T_{Ko1}$ größer ist als oder gleich groß ist wie die Temperatur $T_{rück}$

Der Betriebszustand B liegt vor, wenn Brauchwasser entnommen wird und die Temperatur $T_{Ko1}$ kleiner ist als die Temperatur $T_{rück}$.

Der Betriebszustand C liegt vor, wenn keiner der Betriebszustände A oder B vorliegt, wenn also kein Brauchwasser entnommen wird und die Temperatur $T_{brauch}$ größer ist als die Temperatur $T_{rück}$.

Eine (nicht dargestellte) Steuereinheit ermittelt aus den genannten Temperaturen und dem Vorliegen einer Brauchwasserentnahme den jeweiligen Betriebszustand und schaltet das erste Sperrventil 110 sowie das zweite Sperrventil 122 in Abhängigkeit vom ermittelten Betriebszustand.

Im Betriebszustand A sind sowohl das erste Sperrventil 110 als auch das zweite Sperrventil 122 geschlossen. Das Kondensat kann daher weder durch die erste Umgehungsleitung 108 noch durch die zweite Umgehungsleitung 120 strömen, sondern fließt statt dessen erst durch den Kondensat-Heizwasser-Wärmetauscher 96, wo es Wärme an das im Heizwasserkreislauf 152 umlaufende Heizwasser abgibt, und dann durch das Rückschlagventil 106 und den Kondensat-Brauchwasser-Wärmetauscher 114, wo es Wärme an das Brauchwasser in der Brauchwasserzuführleitung 166 abgibt.

Die Bedingungen für den Betriebszustand A gewährleisten dabei, daß das Kondensat in beiden Wärmetauschern 96, 114 Wärme abgibt und nicht etwa Wärme aufnimmt.

Im Betriebszustand B ist das erste Sperrventil 110 geöffnet und das zweite Sperrventil 122 geschlossen.

Da die erste Umgehungsleitung 108 einen geringeren Strömungswiderstand aufweist als der Kondensat-Heizwasser-Wärmetauscher 96 und das Rückschlagventil 106 mit den Kondensatleitungen 94, 98 und 102, strömt das Kondensat zum größten Teil unter Umgehung des Kondensat-Heizwasser-Wärmetauschers 96 durch die erste Umgehungsleitung 108 zur ersten Zusammenführung 104 und von dort weiter durch den Kondensat-Brauchwasser-Wärmetauscher 114, in dem es Wärme an das Brauchwasser in der Brauchwasserzuführleitung 166 abgibt.

Wegen des Rückschlagventils 106 kann das Kondensat nicht von der ersten Zusammenführung 104 in den Kondensat-Heizwasser-Wärmetauscher 96 fließen.

Ferner kann das Kondensat auch nicht durch die zweite Umgehungsleitung 120 fließen, da diese durch das zweite Sperrventil 122 gesperrt ist.

Durch die vorstehend genannten Betriebsbedingungen des Betriebszustandes B ist gewährleistet, daß das Kondensat im Kondensat-Brauchwasser-Wärmetauscher 114 Wärme abgibt und nicht vom Heizwasser Wärme aufnimmt.

Im Betriebszustand C ist das erste Sperrventil 110 geschlossen, während das zweite Sperrventil 122 geöffnet ist. Die erste Umgehungsleitung 108 ist somit für das Kondensat gesperrt, so daß es von der ersten Verzweigung 92 aus durch den Kondensat-Heizwasser-Wärmetauscher 96, in dem es Wärme an das Heizwasser im Heizwasser-Kreislauf 152 abgibt, zur zweiten Verzweigung 100 strömt.

Da die zweite Umgehungsleitung 120 einen geringeren Strömungswiderstand aufweist als das Rückschlagventil 106, der Kondensat-Brauchwasser-Wärmetauscher 114 und die Kondensatleitungen 102, 112 und 116, strömt das Kondensat von der zweiten Verzweigung 100 unter Umgehung des Kondensat-Brauchwasser-Wärmetauschers 114 durch die zweite Umgehungsleitung 120 zur zweiten Zusammenführung 118.

Durch die vorstehend genannten Betriebsbedingungen des Betriebszustandes C ist in der Regel gewährleistet, daß das Kondensat im Kondensat-Heizwasser-Wärmetauscher 96 Wärme an das Heizwasser abgibt und keine Wärme aus dem Brauchwasser aufnimmt.

Mittels der vorstehend beschriebenen Steuerung des ersten Sperrventils 110 und des zweiten Sperrventils 122 ist somit eine optimale Nutzung der im Restwärmetauscher 44 vom Brennerabgas in den Kondensatstrom gelangten Restwärme möglich, ohne daß kostspielige und reparaturanfällige Mehrwegeventile benötigt werden.

Im Prinzip ist jedoch auch eine entsprechende Steuerung des Kondensatweges mittels Mehrwegventilen möglich.

In jedem der Betriebszustände A, B und C gelangt das Kondensat von der zweiten Zusammenführung 118 zum Dreiwegeventil 126.

Das Dreiwegeventil 126 ist während des Brennerbetriebes so geschaltet, daß das Kondensat durch die Kondensatleitung 128 zum oberen Kondensateintritt 54 des Restwärmetauschers 44 gelangt, so daß im Wärmetauscherraum 136 des Restwärmetauschers 44 das monodisperse Kondensatspray 180 gebildet werden kann.

Nach Abschluß der Betriebsphase des Brenners 32, wenn also kein heißes Abgas mehr in den Wärmetauscherraum 136 des Restwärmetauschers 44 eintritt, wird das Dreiwegeventil 126 so geschaltet, daß das Kondensat von der Kondensatleitung 124 durch die Kondensatleitung 130 und den unteren Kondensateintritt 50 direkt in den Kondensatsumpf 150 gelangt. Der Kondensatumlauf durch den so verkürzten Kondensatkreislauf 62 wird nach dem Abschalten des Brenners 32 (mit verminderter Leistung der Kondensatpumpe 80) noch eine Zeitlang fortgesetzt, um die in dem gesamten umlaufenden Kondensat gespeicherte nutzbare Wärme möglichst vollständig in den Wärmetauschern 96 und/oder 114 an das Heizwasser bzw. das Brauchwasser abzugeben.

Der direkte Eintritt des Kondensats in den Kondensatsumpf 150 unter Umgehung der Düsenvorkammer 134 und der Düsenplatte 132 verringert dabei den Strömungswiderstand und somit die benötigte Pumpenleistung und vermeidet unnötige Kondensatverluste im Wärmetauscherraum 136.

Wie bereits erwähnt, gelangt das während des Brennerbetriebes im Heizwasserkessel 34 erhitzte Heizwasser in die Heizkörperanordnung 156, wo es Wärme an die Umgebungsluft, beispielsweise eines zu beheizenden Innenraums, abgibt.

Von dort gelangt das Heizwasser in den Heizwasser-Brauchwasser-Wärmetauscher 160, in dem das Heizwasser Wärme an das Brauchwasser in der Brauchwasserzuführleitung 166 abgibt.

Von dort gelangt das Heizwasser in den Kondensat-Heizwasser-Wärmetauscher 96, in dem das Heizwasser Wärme aus dem Kondensat im Kondensatkreislauf 62 aufnimmt, sofern einer der Betriebszustände A oder C vorliegt.

Schließlich kehrt das Heizwasser durch die Heizwasser-Rücklaufleitung 164 in den Heizwasserkessel 34 zurück.

Das Brauchwasser in der Brauchwasserzuführleitung 166 wird in der Wärmetauscherschlange 174 des Heizwasserkessels 34 durch das Heizwasser, im Heizwasser-Brauchwasser-Wärmetauscher 160 ebenfalls durch das Heizwasser und, sofern einer der Betriebszustände A oder B vorliegt, im Kondensat-Brauchwasser-Wärmetauscher 114 erwärmt.

Die Brauchwasserzuführleitung 166 wird nur dann von Brauchwasser durchströmt, wenn eine der (nicht dargestellten) Brauchwasserentnahmestellen geöffnet ist. Um eine ausreichende Wärmekapazität zur Aufnahme von Wärme aus dem Kondensatkreislauf 62 oder dem Heizwasserkreislauf 152 zur Verfügung zu stellen, ist es von Vorteil, den Heizwasser-Brauchwasser-Wärmetauscher 160 und/oder den Kondensat-Brauchwasser-Wärmetauscher 114 als Brauchwasserspeicher mit einem großen Brauchwasservolumen auszubilden, der vom Heizwasser bzw. dem Kondensat durchströmt wird.

Der Sommerbetrieb der Vorrichtung 30 unterscheidet sich vom bislang beschriebenen Winterbetrieb dadurch, daß der Umlauf des Heizwassers im Heizwasserkreislauf 152 stillgelegt ist.

Im Sommerbetrieb wird daher eine Betriebsphase des Brenners 32 nur durch die Entnahme von Brauchwasser aus der Brauchwasserzuführleitung 166 und eine daraus resultierende Abnahme der Temperatur im Heizwasserkessel 34 ausgelöst.

Da der Heizwasserumlauf im Heizwasserkreislauf 152 stillgelegt ist, bleibt das erste Sperrventil 110 stets geöffnet, so daß das Kondensat unter Umgehung des Kondensat-Heizwasser-Wärmetauschers 96 zur ersten Zusammenführung 104 strömt, während das zweite Sperrventil 122 stets geschlossen bleibt. Im Sommerbetrieb liegt also unabhängig von den Temperaturen $T_{Ko1}$, $T_{rück}$ und $T_{brauch}$ sowie vom Vorliegen einer Brauchwasserentnahme stets der Betriebszustand B vor.

Im übrigen entspricht die Funktionsweise der ersten Ausführungsform der erfindungsgemäßen Vorrichtung 30 im Sommerbetrieb derjenigen im Winterbetrieb.

Falls während des Sommer- oder Winterbetriebs zumindest zeitweise keine Restwärmenutzung gewünscht wird (beispielsweise bei sehr seltener Inbetriebnahme des Brenners 32 oder bei einer Störung des Kondensatkreislaufs 62) oder möglich ist (beispielsweise an besonders kalten Wintertagen, wenn die Heizungsrücklauftemperatur wegen der extremen Kälte derart ansteigt, daß im Restwärmetauscher 44 der Abgastaupunkt nicht mehr unterschritten werden kann), kann die Umlenkplatte 60 im Temperaturwechsler 38 in die Umleitstellung gebracht werden, in der sie das heiße, vom Brenner 32 kommende Abgas aus der Abgasleitung 36 unter Umgehung des Restwärmetauschers 44 direkt in das Schornsteinzuführrohr 58 lenkt.

Falls bei hinreichend hohem Brauchwasserverbrauch mit der beschriebenen Vorrichtung 30 eine ganzjährige Restwärmenutzung durch Abgabe von Wärme aus dem Kondensat an Brauchwasser in der Brauchwasserzuführleitung 166 möglich ist, kann statt der beweglichen Umlenkplatte 60 auch eine in der Durchleitstellung fixierte Platte verwendet werden, wodurch Kosten eingespart und eine geringere Störanfälligkeit erreicht werden.

Eine zweite Ausführungsform der erfindungsgemäßen Vorrichtung 30 zur Nutzung der Restwärme eines Abgases einer Feuerungsanlage unterscheidet sich von der vorstehend beschriebenen ersten Ausführungsform lediglich hinsichtlich der Ausgestaltung des Restwärmetauschers 44.

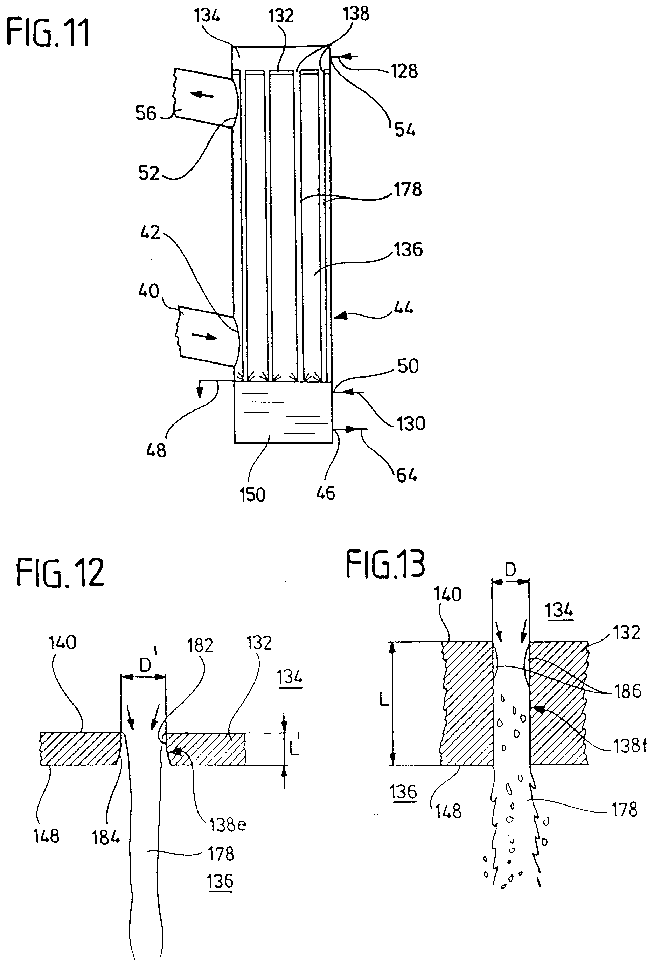

Wie in Fig. 11 dargestellt, wird in dem Wärmetauscherraum 136 des Restwärmetauschers 44 der zweiten Ausführungsform kein monodisperses Kondensatspray erzeugt, sondern es werden nicht zerfallende, von der Düsenplatte 132 bis zum Kondensatsumpf 150 frei fallende Kondensatstrahlen 178 erzeugt, deren Oberfläche als Wärmetauscherfläche dient.

Nicht zerfallende, idealerweise bis hinunter zum Kondensatsumpf 150 intakte Kondensatstrahlen 178 lassen sich mit kurzen, scharfkantigen Düsenbohrungen 138 erreichen, von denen eine in Fig. 12 im Längsschnitt gezeigt ist.

Die in Fig. 12 dargestellte Düsenbohrung 138e umfaßt einen im wesentlichen zylindrischen Einlaufbereich 182, der auf der Oberseite 140 der Düsenplatte 132 mündet und dessen Achse senkrecht zu der Oberseite 140 ausgerichtet ist, und einen im wesentlichen kegelstumpfförmigen, sich nach unten an den Einlaufbereich 182 anschließenden und zu diesem koaxialen Auslaufbereich 184, dessen kleinster Durchmesser mit dem Durchmesser D' des Einlaufbereiches übereinstimmt, der sich nach unten hin weitet und auf der Unterseite 148 der Düsenplatte 132 mündet.

Die Summe der Längen des Einlaufbereichs 182 und des Auslaufbereichs 184 wird mit L' bezeichnet.

Zur Erzeugung nicht zerfallender Kondensatstrahlen 178 wird das Verhältnis der Länge L' zum Durchmesser D' vorteilhafterweise kleiner als ungefähr 2, vorzugsweise kleiner als ungefähr 1/2, gewählt.

Die Einlauföffnung des Einlaufbereichs 182 ist vorzugsweise scharfkantig ausgebildet, wobei unter "scharfkantig" zu verstehen sein soll, daß der Kantenradius weniger als ungefähr 1/4 des Durchmessers D' des Einlaufbereichs 182 beträgt. Besonders günstig ist es, wenn der Kantenradius weniger als ungefähr 1/10 des Durchmessers D' beträgt.

Die Strömungsgeschwindigkeit des Kondensats durch die Düsenbohrung 138e wird zur Erzeugung eines intakten Kondensatstrahls 178 durch die Wahl einer geeigneten Förderleistung der Kondensatpumpe 80 so eingestellt, daß sich eine Reynolds-Zahl von weniger als ungefähr 20.000, vorzugsweise von weniger als ungefähr 10.000, und von mehr als ungefähr 100 ergibt.

Der in Fig. 11 dargestellte Restwärmetauscher 44 der zweiten Ausführungsform der erfindungsgemäßen Vorrichtung 30 bietet gegenüber dem in Fig. 2 dargestellten Monodispers-Kondensatspray-Wärmetauscher bei gleicher Bauhöhe eine geringere Wärmetauscherfläche, muß also in der Regel höher ausgelegt werden. Er bietet jedoch gegenüber dem Monodispers-Kondensatspray-Wärmetauscher den Vorteil, daß auch bei hohen Strömungsgeschwindigkeiten des Abgases im Wärmetauscherraum 136 keine Tropfen gebildet werden, die vom Abgasstrom aus dem Restwärmetauscher 44 hinausgetragen werden können, während beim Monodispers-Kondensatspray-Wärmetauscher für die Tropfen des Kondensatsprays bei Überschreiten einer gewissen Relativgeschwindigkeit zwischen den fallenden Kondensattropfen und dem aufsteigenden Abgas die Weberzahl zu groß wird, so daß die Tropfen des Sprays in kleinere Tröpfchen zerfallen, welche vom Abgasstrom mitgerissen werden können.

Da bei dem Restwärmetauscher 44 mit intakten Kondensatstrahlen 178 hohe Relativgeschwindigkeiten zwischen Abgas und fallendem Kondensat zulässig sind, kann der Restwärmetauscher 44 mit intakten Kondensatstrahlen 178 eine geringere Querschnittsfläche als der Kondensatspray-Wärmetauscher der ersten Ausführungsform aufweisen.

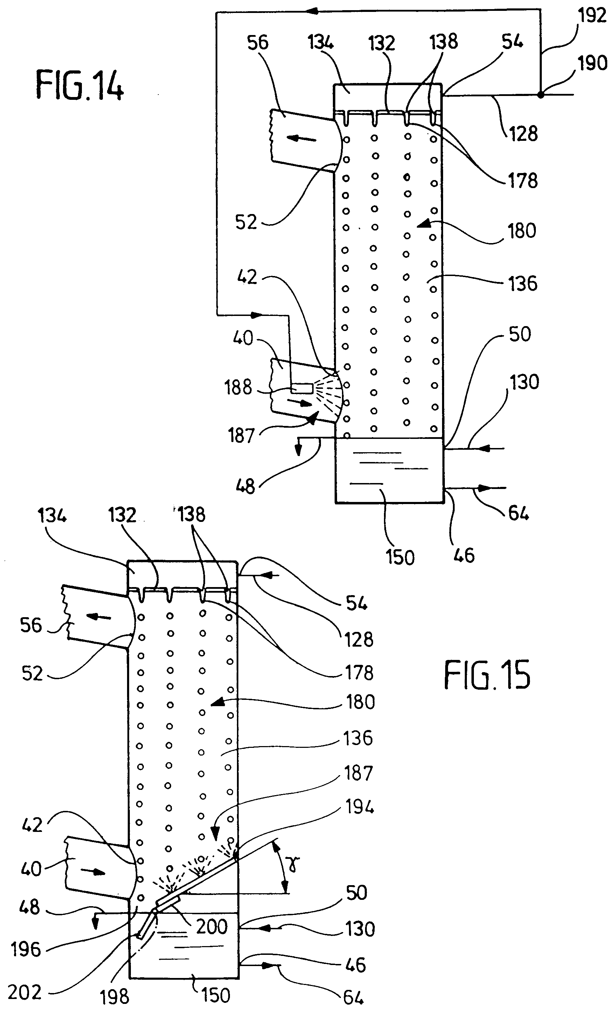

Wird eine lange Düsenbohrung 138 zusammen mit einem scharfkantigen Einlauf verwendet, so kann dies zu Kavitation in der Düsenbohrung führen, welche wiederum die Abspaltung von Tröpfchen aus dem Kondensatstrahl 178 zur Folge hat. Ein solcher Fall ist in Fig. 13 für eine zylindrische Düsenbohrung 138f mit scharfkantiger Einlauföffnung und einer Länge L, die größer ist als das ungefähr Dreifache des Durchmessers D der Düsenbohrung 138f, dargestellt. Im Einlaufbereich entstehende Kavitationsblasen sind mit dem Bezugszeichen 186 bezeichnet.

Kavitation in der Düsenbohrung kann insbesondere bei warmem Kondensat und niedrigem Flüssigkeitsdruck im Kondensat auftreten.

Neben dem Entstehen unerwünscht kleiner Tropfen hat die Kavitation eine Erhöhung der erforderlichen Pumpenleistung der Kondensatpumpe 80 zur Folge.

Denen der Kavitation vergleichbare negative Auswirkungen hat das Entstehen einer Einlaufrezirkulation in der Düsenbohrung, die ebenfalls durch eine scharfkantige Einlauföffnung in Verbindung mit zu großer Bohrungslänge L bedingt sein kann.

Abgesehen von den beschriebenen Unterschieden im Restwärmetauscher 44 stimmt die zweite Ausführungsform der erfindungsgemäßen Vorrichtung 30 mit der ersten Ausführungsform in Aufbau und Funktion überein.

Eine dritte Ausführungsform der erfindungsgemäßen Vorrichtung zur Nutzung der Restwärme eines Abgases einer Feuerungsanlage unterscheidet sich von der ersten Ausführungsform ebenfalls nur hinsichtlich des Aufbaus des Restwärmetauschers 44.

Wie in Fig. 14 dargestellt, wird auch in dem Restwärmetauscher 44 der dritten Ausführungsform der erfindungsgemäßen Vorrichtung 30 ein monodisperses Kondensatspray 180 erzeugt.

Zusätzlich wird jedoch ein Verdampfungs-Kondensatspray 187 mittels einer nahe des Abgaseintritts 42 im Wärmetauscherraum 136 oder, wie in Fig. 14 dargestellt, im Abgaszuführrohr 40 angeordneten Zerstäuberdüse 188 erzeugt. Die Zerstäuberdüse 188 wird durch eine an einer dritten Verzweigung 190 von der Kondensatleitung 128 abzweigende Kondensatzweigleitung 192 mit Kondensat gespeist.

Die Verzweigung 190 ist so ausgebildet, daß nur ungefähr ein Tausendstel bis ein Hundertstel des gesamten Kondensatstroms durch die Kondensatleitung 128 in die Kondensatzweigleitung 192 gelangt und durch die Zerstäuberdüse 188 versprüht wird. Die versprühte Kondensatmenge entspricht im zeitlichen Mittel ungefähr der im Restwärmetauscher 44 durch Kondensation aus dem Abgas netto gebildeten Kondensatmenge.

Die Menge des durch die Zerstäuberdüse 188 gebildeten Verdampfungs-Kondensatsprays 187 wird ferner so gewählt, daß sämtliche Tröpfchen des Verdampfungs-Kondensatsprays 187 durch den heißen Abgasstrom vollständig verdampft werden. Das Verdampfungs-Kondensatspray 187 braucht daher nicht notwendigerweise monodispers zu sein.

Die arithmetische mittlere Tropfengröße des Verdampfungs-Kondensatsprays 187 beträgt vorzugsweise nur ungefähr 10 bis 100 µm, die größten Tropfen in diesem Verdampfungs-Kondensatspray 187 sollten einen Durchmesser von weniger als ungefähr 200 µm aufweisen.

Um die Tropfen des zweiten Kondensatsprays 187 klein zu halten, kann der Druck des Kondensatstromes an der Zerstäuberdüse 188 durch eine (nicht dargestellte) in der Kondensatzweigleitung 192 angeordnete zusätzliche Kondensatförderpumpe erhöht werden.

Die Durchmesser D der Düsenkanäle 146 der Düsenbohrungen 138 in der Düsenplatte 132 werden so gewählt, daß die Tropfen des monodispersen Kondensatsprays 180 einen Durchmesser von ungefähr 0,4 mm bis ungefähr 5 mm aufweisen, also relativ grob sind.

Die Tropfen des monodispersen Kondensatsprays 180 sind daher zu groß, um vom in den Wärmetauscherraum 136 eintretenden Abgas verdampft zu werden. Dafür kondensiert der im Abgasstrom mitgeführte Wasserdampf an den großen Tropfen leichter als an kleineren.

Während also bei dem Monodispers-Kondensatspray-Wärmetauscher der ersten Ausführungsform Kondensattropfen derselben Größe für Verdampfung und Rekondensation verwendet werden, werden bei der dritten Ausführungsform die Tröpfchen des Verdampfungs-Kondensatsprays 187 ausschließlich verdampft, während die Tropfen des monodispersen Kondensatsprays 180 lediglich der Abkühlung des Abgasstroms und der Anlagerung von kondensiertem Wasserdampf aus dem Abgasstrom dienen.

Die Verwendung zweier unterschiedlicher Kondensatsprays erlaubt es daher, die mittlere Tropfengröße oder das Tropfengrößenspektrum, einerseits für eine möglichst einfache und rasche Verdampfung, andererseits für eine möglichst leichte Kondensation, getrennt zu optimieren.

Im übrigen entspricht die dritte Ausführungsform der erfindungsgemäßen Vorrichtung 30 hinsichtlich Aufbau und Funktion der ersten Ausführungsform.

Eine vierte Ausführungsform der erfindungsgemäßen Vorrichtung zur Nutzung der Restwärme eines Abgases einer Feuerungsanlage unterscheidet sich von der vorstehend beschriebenen ersten Ausführungsform wiederum hinsichtlich des Aufbaus des Restwärmetauschers 44.

Wie in Fig. 15 dargestellt, wird auch bei der vierten Ausführungsform zusätzlich zu einem mittels der Düsenplatte 132 erzeugten monodispersen Kondensatspray 180 ein Verdampfungs-Kondensatspray 187 in einem Bereich des Wärmetauscherraumes 136 nahe dem Abgaseintritt 42 erzeugt. Dazu wird aber im Gegensatz zur dritten Ausführungsform keine Zerstäuberdüse, sondern eine oberhalb des Kondensatsumpfes 150 im Wärmetauscherraum 136 angeordnete, unter einem Winkel γ gegen die Horizontale geneigte Zerstäuberplatte 194 verwendet.

Die relativ großen Tropfen des monodispersen Kondensatsprays 180 treffen auf die geneigte Zerstäuberplatte 194 auf und zerfallen dabei in kleinere Tröpfchen und Ligamente, die vom in den Wärmetauscherraum 136 eintretenden heißen Abgas leicht verdampft werden können. Der nicht verdampft werdende Anteil des auf die Zerstäuberplatte 194 auftreffenden Kondensats läuft an der Zerstäuberplatte 194 herab und gelangt durch einen Durchlaß 196 zwischen einem Rand der Zerstäuberplatte 194 und der Innenwand des Wärmetauscherraumes 136 in den Kondensatsumpf 150.

Der Durchlaß 196 ist mittels einer um eine horizontale Achse 198 schwenkbaren und mit einem Anschlag 200 versehenen Verschlußplatte 202 verschließbar.

In der in Fig. 15 gezeigten Offenstellung der Verschlußplatte 202 liegt der Anschlag 200 an einer Unterseite der Zerstäuberplatte 194 an, und der Durchlaß 196 ist für den Durchtritt von Kondensat geöffnet. In diese Offenstellung wird die Verschlußplatte 202 während des Betriebes des Brenners 32 gebracht, während das monodisperse Kondensatspray 180 erzeugt wird.

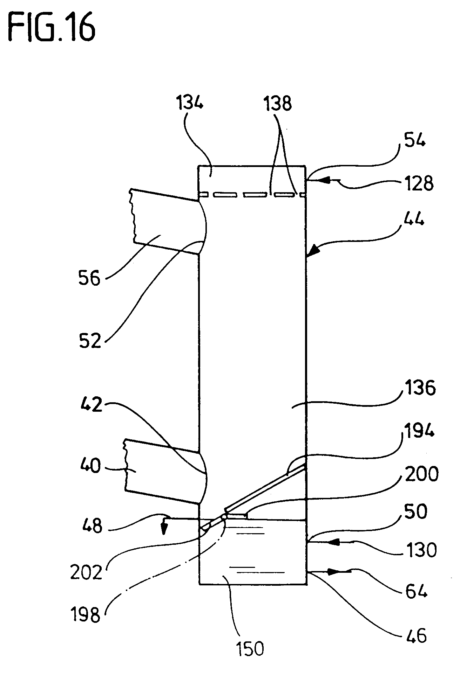

Während der Betriebspausen des Brenners 32, in denen kein monodisperses Kondensatspray 180 erzeugt wird, wird die Verschlußplatte 202 in die in Fig. 16 gezeigte Geschlossenstellung gebracht, in der ein dem Anschlag 200 abgewandter Rand der Verschlußplatte 202 an einer Innenwand des Wärmetauscherraums 136 anliegt und der Durchlaß 196 verschlossen ist.

Durch das Verschließen des Durchlasses 196 wird erreicht, daß während der Betriebspausen des Brenners 32 wenig oder gar kein Kondensat aus dem Kondensatsumpf 150 verdunstet.

Der Neigungswinkel γ der Zerstäuberplatte 194 wird vorzugsweise zwischen ungefähr 15° und ungefähr 40° gewählt.

Das Verhältnis der auf den Querschnitt des Wärmetauscherraums 136 parallel projizierten Fläche des Durchlasses 196 zu der auf den Querschnitt des Wärmetauscherraums 136 parallel projizierten Fläche der Zerstäuberplatte 194 wird vorzugsweise zwischen ungefähr 1/20 und ungefähr 1/5 gewählt.

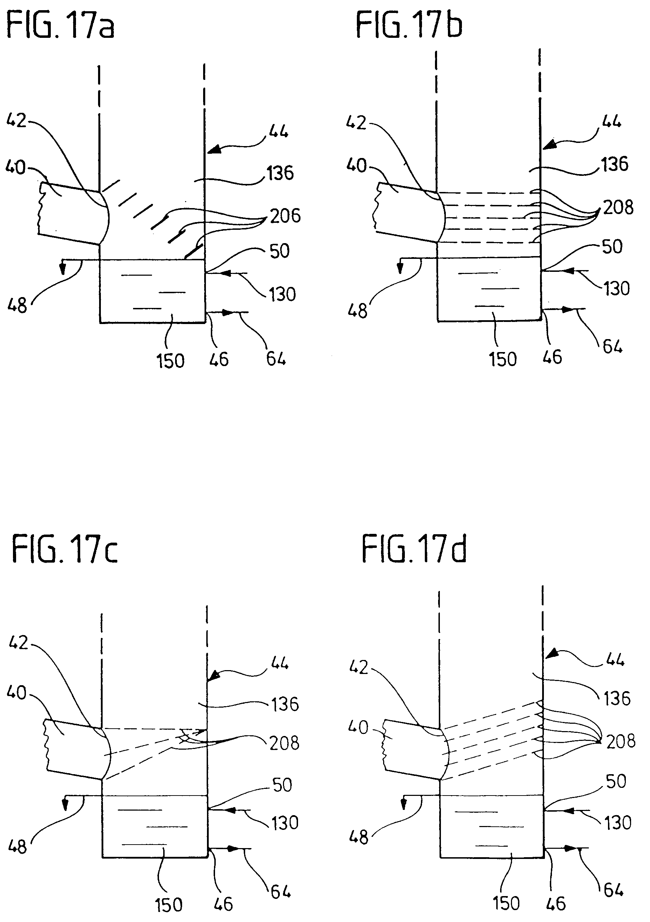

Statt einer einzelnen Zerstäuberplatte 194, wie in den Fig. 15 und 16 dargestellt, können bei der vierten Ausführungsform der erfindungsgemäßen Vorrichtung 30 zur Erzeugung des Verdampfungs-Kondensatsprays 187 auch Anordnungen aus mehreren Zerstäuberplatten oder Prallblechen verwendet werden, von denen einige schematisch in den Fig. 17a bis 17d dargestellt sind.

Fig. 17a zeigt eine gestaffelte Anordnung von mehreren, beispielsweise sechs geschlossenen Prallblechen 206, die parallel zueinander und gegen die Horizontale geneigt im unteren Bereich des Wärmetauscherraums 136 des Restwärmetauschers 44 nahe des Abgaseintritts 42 angeordnet sind.

Die Prallbleche 206 überdecken einzeln jeweils nur einen Teilbereich des Querschnitts des Wärmetauscherraums 136, zusammen jedoch den gesamten Querschnitt des Wärmetauscherraums 136.

Der dem Abgaseintritt 42 abgewandte Rand jeden Prallblechs 206 liegt höher als der dem Abgaseintritt 42 zugewandte Rand des Prallblechs 206, so daß die Prallbleche 206 als Leitbleche für die im Wärmetauscherraum 136 aufwärts gerichtete Abgasströmung dienen.

Von den unten liegenden Rändern der Prallbleche 206 abtropfendes Kondensat gelangt ungehindert in den Kondensatsumpf 150.

Fig. 17b zeigt eine Anordnung aus mehreren, beispielsweise fünf übereinander angeordneten, zueinander parallelen und horizontal ausgerichteten Lochblechen 208, die auf der Höhe des Abgaseintritts 42 im unteren Bereich des Wärmetauscherraums 136 angeordnet sind.

Jedes der Lochbleche 208 überdeckt einzeln den gesamten Querschnitt des Wärmetauscherraums 136. Jedes der Lochbleche, die beispielsweise aus Edelstahl gefertigt sein können, weist einen Durchlaß von ungefähr 55 bis 75% auf. Das heiße Abgas, das aus dem Abgaszuführrohr 40 durch den Abgaseintritt 42 in den Wärmetauscherraum 136 eintritt, kann durch die Löcher in den Lochblechen 208 nach oben strömen.

Kondensattropfen, die auf eines der Lochbleche 208 fallen, zerfallen in kleinere Tröpfchen und Ligamente, die durch das Abgas verdampft werden. Kondensattropfen, die durch die Öffnungen eines der Lochbleche 208 fallen, erreichen das jeweils darunter liegende Lochblech 208.

Werden die Löcher in einem Lochblech 208 jeweils versetzt zu den Löchern in dem darüber- und in dem darunterliegenden Lochblech 208 angeordnet, so läßt sich erreichen, daß jeder durch den Wärmetauscherraum 136 fallende Kondensattropfen mindestens einmal auf ein Lochblech 208 auftrifft und in kleinere Tröpfchen zerfällt, bevor er den Kondensatsumpf 150 erreicht. Dadurch werden die Wärme- und Stoffübertragungsvorgänge verbessert.

In Fig. 17c ist eine Abwandlung der Lochblechanordnung der Fig. 17b zu sehen, bei der mehrere, beispielsweise drei, Lochbleche 208 der im Zusammenhang mit Fig. 17b beschriebenen Art unter verschiedenen Winkeln gegen die Horizontale ausgerichtet sind und an einem gemeinsamen Rand aneinanderstoßen.

In Fig. 17d schließlich ist eine weitere Abwandlung der Lochblechanordnung aus Fig. 17b zu sehen, bei der mehrere, beispielsweise fünf Lochbleche 208 der im Zusammenhang mit Fig. 17b beschriebenen Art parallel zueinander, jedoch geneigt gegen die Horizontale in einem unteren Bereich des Wärmetauscherraumes 136 auf Höhe des Abgaseintritts 42 angeordnet sind.

Dabei sind die Lochbleche 208 so angeordnet, daß sie zu einem dem Abgaseintritt 42 abgewandten Rand hin ansteigen, so daß die Lochbleche 208 als Leitbleche für die Strömung des heißen Abgases vom Abgaseintritt 42 nach oben zum Abgasaustritt 52 hin dienen können.

Mittels jeder der in den Fig. 17a bis 17d dargestellten Prallblech- bzw. Lochblechanordnungen wird aus einem mittels der Düsenplatte 132 erzeugten monodispersen Kondensatspray 180 ein Verdampfungs-Kondensatspray 187 aus kleineren Tröpfchen erzeugt, das durch das heiße Abgas, das in den Wärmetauscherraum 136 einströmt, vollständig verdampft wird.

Im übrigen stimmt die vierte Ausführungsform der erfindungsgemäßen Vorrichtung 30 hinsichtlich Aufbau und Funktion mit der vorstehend beschriebenen ersten Ausführungsform überein.

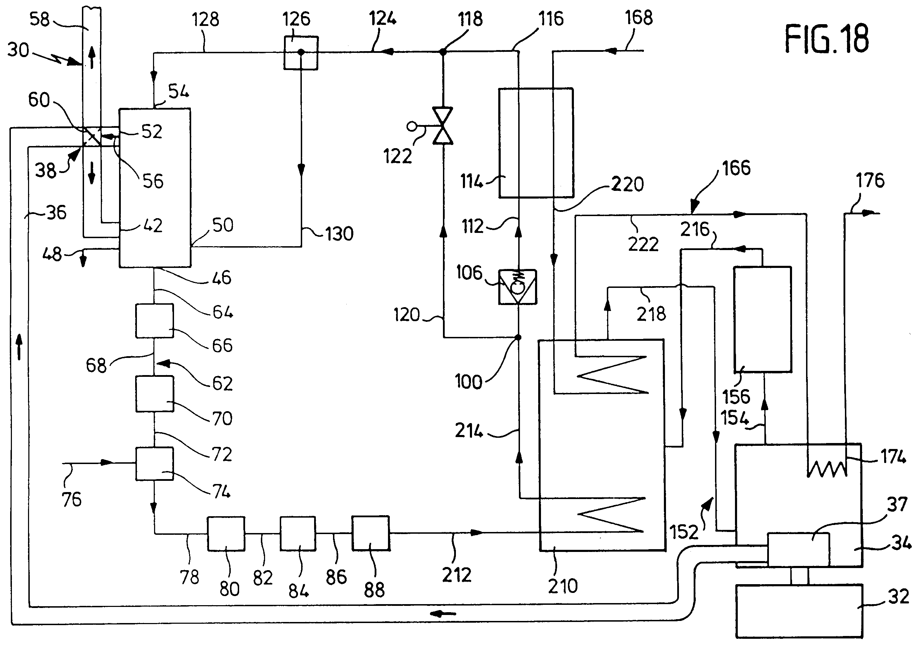

Eine in Fig. 18 schematisch dargestellte fünfte Ausführungsform der erfindungsgemäßen Vorrichtung zur Nutzung der Restwärme eines Abgases einer Feuerungsanlage unterscheidet sich von der ersten Ausführungsform dadurch, daß der Kondensat-Heizwasser-Wärmetauscher 96 und der Heizwasser-Brauchwasser-Wärmetauscher 160 der ersten Ausführungsform in einem Kondensat-Heizwasser-Brauchwasser-Doppelwärmetauscher 210 zusammengefaßt sind, der im Kondensatkreislauf 62 zwischen dem Druckmesser 88 und der Verzweigung 100 angeordnet ist.

Eine Kondensatleitung 212 führt vom Druckmesser 88 zu einem Kondensat-Eingang des Kondensat-Heizwasser-Brauchwasser-Doppelwärmetauschers 210.

Ein Kondensatausgang des Doppelwärmetauschers 210 ist über eine weitere Kondensatleitung 214 mit der Verzweigung 100 verbunden.

Der Kondensat-Heizwasser-Wärmetauscher 96, die erste Umgehungsleitung 108 mit dem ersten Sperrventil 110 sowie die Kondensatleitungen 90, 94 und 98 des Kondensatkreislaufs 62 der ersten Ausführungsform (siehe Fig. 1) entfallen.

Von der Heizkörperanordnung 156 im Heizwasserkreislauf 152 führt eine Heizwasserleitung 216 zu einem Heizwasser-Eingang des Doppelwärmetauschers 210.

Ein Heizwasser-Ausgang des Doppelwärmetauschers 210 ist über eine Heizwasser-Rücklaufleitung 218 mit dem Heizwasserkessel 34 verbunden.

Der Heizwasser-Brauchwasser-Wärmetauscher 160, der Kondensat-Heizwasser-Wärmetauscher 96, die Heizwasserleitungen 158 und 162 sowie die Heizwasser-Rücklaufleitung 164 des Heizwasserkreislaufs 152 der ersten Ausführungsform (siehe Fig. 1) entfallen.

Von einem Brauchwasser-Ausgang des Kondensat-Brauchwasser-Wärmetauschers 114 führt eine Brauchwasserleitung 220 zu einem Brauchwasser-Eingang des Kondensat-Heizwasser-Brauchwasser-Doppelwärmetauschers 210.

Ein Brauchwasser-Ausgang des Doppelwärmetauschers 210 ist über eine weitere Brauchwasserleitung 222 mit dem Brauchwasser-Eingang der Wärmetauscherschlange 174 verbunden.

Der Heizwasser-Brauchwasser-Wärmetauscher 160 sowie die Brauchwasserleitungen 170 und 172 der Brauchwasserzuführleitung 166 der ersten Ausführungsform (siehe Fig. 1) entfallen.

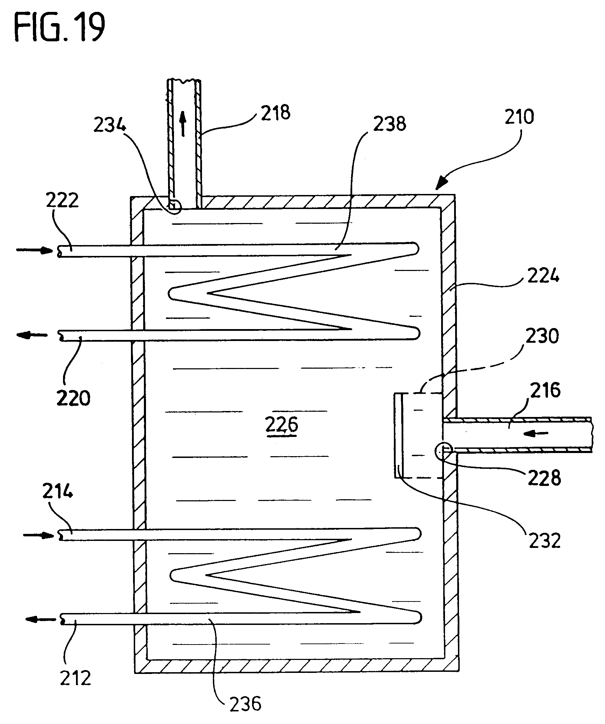

Der in Fig. 19 schematisch im einzelnen dargestellte Kondensat-Heizwasser-Brauchwasser-Doppelwärmetauscher 210 umfaßt einen beispielsweise aufrecht stehenden zylindrischen, wärmeisolierten Heißwasserspeicher 224, in dessen mit Heizwasser gefüllten Innenraum 226 die Heizwasserleitung 216 und die Heizwasser-Rücklaufleitung 218 münden.

Die Mündungsöffnung 228 der Heizwasserleitung 216 ist in der Wand des Heißwasserspeichers 224 auf ungefähr halber Höhe derselben angeordnet und von einem ringförmigen Siebblech 230 konzentrisch umgeben, welches ein zylindrisches Prallblech 232 trägt.

Die Mündungsöffnung 234 der Heizwasser-Rücklaufleitung 218 ist in der oberen Stirnwand des Heißwasserspeichers 224 angeordnet.

Im unteren Bereich des Innenraums 226 des Heißwasserspeichers 224 ist eine Kondensat-Wärmetauscherschlange 236 angeordnet, deren Enden wasserdicht durch die Seitenwand des Heißwasserspeichers 224 geführt und an die Kondensatleitung 212 bzw. an die Kondensatleitung 214 angeschlossen sind.

In einem oberen Bereich des Innenraums 226 des Heißwasserspeichers 224 ist nahe der Mündungsöffnung 234 der Heizwasser-Rücklaufleitung 218 eine Brauchwasser-Wärmetauscherschlange 238 angeordnet, deren Enden wasserdicht durch die Seitenwand des Heißwasserspeichers 224 geführt und an die Brauchwasserleitung 220 bzw. die Brauchwasserleitung 222 angeschlossen sind.

Die Funktionsweise des Kondensat-Heizwasser-Brauchwasser-Doppelwärmetauschers 210 ist die folgende:

Während des Umlaufs des Kondensats im Kondensatkreislauf 62, also während des Betriebes und kurz nach Abschalten des Brenners 32, wird die Kondensat-Wärmetauscherschlange 236 im Heißwasserspeicher 224 von im Restwärmetauscher 44 erwärmtem Kondensat durchströmt, das Wärme an das im unteren Bereich des Heizwasserspeichers 224 befindliche Heizwasser abgibt.

Bei Entnahme von Brauchwasser an einer der (nicht dargestellten) Brauchwasserentnahmestellen aus der Brauchwasser-Zuführleitung 166 wird die Brauchwasser-Wärmetauscherschlange 238 im Heizwasserspeicher 224 von vergleichsweise kaltem Brauchwasser durchströmt, das das im oberen Bereich des Innenraums 226 des Heizwasserspeichers 224 befindliche Heizwasser abkühlt.

Da die Dichte des Heizwassers mit steigender Temperatur abnimmt, bildet sich im Innenraum 226 des Heizwasserspeichers 224 eine vertikale Temperaturschichtung aus, wobei sich das wärmere Heizwasser im oberen Bereich und das kältere Heizwasser im unteren Bereich des Heizwasserspeichers 224 sammelt.

Aufgrund dieser vertikalen Temperaturschichtung wird erreicht, daß die Temperaturunterschiede zwischen dem erwärmten Kondensat und dem die Kondensat-Wärmetauscherschlange 236 umgebenden Heizwasser einerseits und zwischen dem Brauchwasser und dem die Brauchwasser-Wärmetauscherschlange 238 umgebenden Heizwasser andererseits stets so groß wie möglich sind.

Der Wärmeübergang vom Kondensatkreislauf 62 zum Heizwasserkreislauf 152 bzw. vom Heizwasserkreislauf 152 zur Brauchwasserzuführleitung 166 wird daher durch kurzzeitige Schwankungen in den Kondensat-, Heizwasser- oder Brauchwassertemperaturen nur unwesentlich beeinträchtigt.

Ferner ist es durch die große heizwasserseitige Wärmekapazität des Heizwasserspeichers 224 möglich, eine optimale Restwärmenutzung auch dann zu erreichen, wenn die Brennerbetriebsphasen, während derer erwärmtes Kondensat im Kondensatkreislauf 62 umläuft, nur kurz sind.

Das im Heizwasserkreislauf 152 umlaufende Heizwasser trifft nach seinem Eintritt durch die Mündungsöffnung 228 auf das Prallblech 232, verliert dabei im wesentlichen seinen Impuls und strömt mit nur geringer Geschwindigkeit durch Löcher in dem Siebblech 230 in den Innenraum 226 des Heizwasserspeichers. Die vertikale Temperaturschichtung im Innenraum 226 des Heizwasserspeichers 224 wird daher durch das eintretende Heizwasser nicht gestört.

Durch die Mündungsöffnung 234 an der Oberseite des Innenraums 226 gelangt stets das wärmste Heizwasser aus dem Heizwasserspeicher 224 in die Heizwasser-Rücklaufleitung 218 zum Heizwasserkessel 32, so daß der Temperaturabfall im Heizwasserkessel 32 aufgrund des Umlaufs des Heizwassers im Heizwasserkreislauf 152 und somit die erforderliche Brennertätigkeit minimiert werden.

Die fünfte Ausführungsform der erfindungsgemäßen Vorrichtung 30 weist zwei verschiedene Betriebszustände A' und B' auf, die durch die Temperaturen $T_{Ko3}$ des Kondensats nach dem Austritt aus dem Kondensat-Heizwasser-Brauchwasser-Doppelwärmetauscher 210, durch die Temperatur $T_{brauch}$ des Brauchwassers bei Verlassen des Kondensat-Brauchwasser-Wärmetauschers 114, durch das Vorliegen einer Brauchwasserentnahme und durch das Bestehen eines Heizwasserumlaufs in dem Heizwasserkreislauf 152 bestimmt sind.

Die Temperatur $T_{Ko3}$ wird in der Kondensatleitung 214 gemessen.

Die Temperatur $T_{brauch}$ wird in der Brauchwasserleitung 220 gemessen.

Das Vorliegen einer Brauchwasserentnahme wird mittels eines in der Brauchwasserzuführleitung 166 angeordneten (nicht dargestellten) Strömungs- oder Drucksensors detektiert.

Der Betriebszustand A' liegt im Sommerbetrieb, d.h. bei stillgelegtem Heizwasserumlauf, stets vor.

Im Winterbetrieb, d.h. bei bestehendem Heizwasserumlauf im Heizwasserkreislauf 152, liegt der Betriebszustand A' vor, wenn Brauchwasser entnommen wird oder wenn kein Brauchwasser entnommen wird und die Temperatur $T_{Ko3}$ größer ist als oder gleich groß ist wie die Temperatur $T_{brauch}$.

Der Betriebszustand B' liegt vor, wenn der Betriebszustand A' nicht vorliegt.

Eine (nicht dargestellte) Steuereinheit ermittelt den jeweils vorliegenden Betriebszustand aus den Meßdaten für die Temperaturen $T_{Ko3}$ und $T_{brauch}$ und dem Vorliegen einer Brauchwasserentnahme und schaltet das Sperrventil 122 in Abhängigkeit vom ermittelten Betriebszustand.

Im Betriebszustand A' ist das Sperrventil 122 geschlossen, so daß die Umgehungsleitung 120 nicht vom Kondensat durchströmt werden kann.

Das Kondensat strömt daher durch den Kondensat-Brauchwasser-Wärmetauscher 114, wo es Wärme an das Brauchwasser in der Brauchwasser-Zuführleitung 166 abgibt, zur Zusammenführung 118.

Die vorstehend genannten Bedingungen für den Betriebszustand A' gewährleisten daher, daß das Kondensat im Kondensat-Brauchwasser-Wärmetauscher 114 Wärme an das Brauchwasser abgibt und nicht etwa selbst erwärmt wird.

Im Betriebszustand B' ist das Sperrventil 122 geöffnet. Da die Umgehungsleitung 120 einen geringeren Strömungswiderstand aufweist als der Kondensat-Brauchwasser-Wärmetauscher 114, strömt das Kondensat im wesentlichen unter Umgehung des Kondensat-Brauchwasser-Wärmetauschers 114 durch die Umgehungsleitung 120 zur Zusammenführung 118.

Durch die Steuerung des Sperrventils 122 auf die vorstehend beschriebene Weise wird somit eine optimale Ausnutzung der im Restwärmetauscher 44 vom Abgas des Brenners 32 auf das im Kondensatkreislauf 62 umlaufende Kondensat übertragenen Wärme erreicht.

**Patentansprüche**

1. Verfahren zur Nutzung der restlichen fühlbaren und der latenten Wärme (Restwärme) eines Abgases einer Feuerungsanlage, bei dem das Abgas in einem Restwärmetauscher Wärme an ein Kühlmedium abgibt und das Kühlmedium zumindest zeitweise durch einen Kühlmedium-Heizwasser-Wärmetauscher geführt wird, in dem es Wärme an Heizwasser in einem Heizwasserkreislauf abgibt, **dadurch gekennzeichnet**, daß Wärme aus dem im Restwärmetauscher erwärmten Kühlmedium zumindest zeitweise an Brauchwasser in einer Brauchwasserzuführleitung überführt wird.

2. Verfahren nach Anspruch 1, dadurch gekennzeichnet, daß das im Restwärmetauscher erwärmte Kühlmedium zumindest zeitweise durch einen Kühlmedium-Brauchwasser-Wärmetauscher geführt wird, in dem es Wärme an Brauchwasser in der Brauchwasserzuführleitung abgibt.

3. Verfahren nach Anspruch 2, dadurch gekennzeichnet, daß das Kühlmedium durch den Kühlmedium-Heizwasser-Wärmetauscher geführt wird, bevor es durch den Kühlmedium-Brauchwasser-Wärmetauscher geführt wird.

4. Verfahren nach einem der Ansprüche 2 oder 3, dadurch gekennzeichnet, daß das im Kühlmedium-Brauchwasser-Wärmetauscher erwärmte Brauchwasser durch einen Heizwasser-Brauchwasser-Wärmetauscher geführt wird, in dem das Heizwasser des Heizwasserkreislaufs Wärme an das Brauchwasser abgibt.

5. Verfahren nach Anspruch 4, dadurch gekennzeichnet, daß das Heizwasser durch den Heizwasser-Brauchwasser-Wärmetauscher geführt wird, bevor es durch den Kühlmedium-Heizwasser-Wärmetauscher geführt wird.

6. Verfahren nach einem der Ansprüche 2 bis 5, dadurch gekennzeichnet, daß ein Betriebszustand aus einem Satz von Betriebszuständen in Abhängigkeit von einem Satz von Temperaturen, vom Vorliegen einer Brauchwasserentnahme und vom Bestehen eines Heizwasserumlaufs in dem Heizwasserkreislauf ermittelt wird und daß ein Strömungsweg des Kühlmediums in Abhängigkeit von dem ermittelten Betriebszustand ausgewählt wird.

7. Verfahren nach Anspruch 6, dadurch gekennzeichnet, daß der Satz von Temperaturen die Temperatur des Kühlmediums bei Eintritt in den Restwärmetauscher umfaßt.

8. Verfahren nach einem der Ansprüche 6 oder 7, dadurch gekennzeichnet, daß der Satz von Temperaturen die Temperatur des Kühlmediums bei Verlassen des Restwärmetauschers umfaßt.

9. Verfahren nach einem der Ansprüche 6 bis 8, dadurch gekennzeichnet, daß der Satz von Temperaturen die Temperatur des Heizwassers bei Eintritt in den Kühlmedium-Heizwasser-Wärmetauscher umfaßt.

10. Verfahren nach einem der Ansprüche 6 bis 9, dadurch gekennzeichnet, daß der Satz von Temperaturen die Temperatur des Brauchwassers bei Verlassen des Kühlmedium-Brauchwasser-Wärmetauschers umfaßt.

11. Verfahren nach einem der Ansprüche 6 bis 10, dadurch gekennzeichnet, daß ein als Kaltbrauchwasserspeicher ausgebildeter Kühlmedium-Brauchwasser-Wärmetauscher verwendet wird und daß der Satz von Temperaturen die mittlere Temperatur des Brauchwassers in dem Kaltbrauchwasserspeicher umfaßt.

12. Verfahren nach einem der Ansprüche 6 bis 11, dadurch gekennzeichnet, daß der Satz von Betriebszuständen einen Betriebszustand A umfaßt, in dem das Kühlmedium im wesentlichen durch den Kühlmedium-Heizwasser-Wärmetauscher und durch den Kühlmedium-Brauchwasser-Wärmetauscher geführt wird.

13. Verfahren nach Anspruch 12, dadurch gekennzeichnet, daß in dem Betriebszustand A Sperrventile in Umgehungsleitungen des Kühlmedium-Heizwasser-Wärmetauschers und des Kühlmedium-Brauchwasser-Wärmetauschers geschlossen sind.

14. Verfahren nach einem der Ansprüche 12 oder 13, dadurch gekennzeichnet, daß der Betriebszustand A ausgewählt wird, wenn das Heizwasser im Heizwasserkreislauf umläuft, kein Brauchwasser entnommen wird und die Temperatur des Brauchwassers bei Verlassen des Kühlmedium-Brauchwasser-Wärmetauschers kleiner ist als oder gleich groß ist wie die Temperatur des Heizwassers bei Eintritt in den Kühlmedium-Heizwasser-Wärmetauscher oder wenn das Heizwasser im Heizwasserkreislauf umläuft, Brauchwasser entnommen wird und die Temperatur des Kühlmediums bei Verlassen des Restwärmetauschers größer ist als oder gleich groß ist wie die Temperatur des Heizwassers bei Eintritt in den Kühlmedium-Heizwasser-Wärmetauscher.

15. Verfahren nach einem der Ansprüche 12 oder 13, dadurch gekennzeichnet, daß ein als Kaltbrauchwasserspeicher ausgebildeter Kühlmedium-Brauchwasser-Wärmetauscher verwendet wird und daß der Betriebszustand A ausgewählt wird, wenn das Heizwasser im Heizwasserkreislauf umläuft, kein Brauchwasser entnommen wird und die mittlere Temperatur des Brauchwassers in dem Kaltbrauchwasserspeicher kleiner ist als oder gleich groß ist wie die Temperatur des Heizwassers bei Eintritt in den Kühlmedium-Heizwasser-Wärmetauscher oder wenn das Heizwasser im Heizwasserkreislauf umläuft, Brauchwasser entnommen wird und die Temperatur des Kühlmediums bei Verlassen des Restwärmetauschers größer ist als oder gleich groß ist wie die Temperatur des Heizwassers bei Eintritt in den Kühlmedium-Heizwasser-Wärmetauscher.

16. Verfahren nach einem der Ansprüche 6 bis 15, dadurch gekennzeichnet, daß der Satz von Betriebszuständen einen Betriebszustand B umfaßt, in dem das Kühlmedium im wesentlichen an dem Kühlmedium-Heizwasser-Wärmetauscher vorbeigeführt wird.

17. Verfahren nach Anspruch 16, dadurch gekennzeichnet, daß in dem Betriebszustand B ein Sperrventil in einer Umgehungsleitung des Kühlmedium-Heizwasser-Wärmetauschers geöffnet ist.

18. Verfahren nach einem der Ansprüche 16 oder 17, dadurch gekennzeichnet, daß der Betriebszustand B ausgewählt wird, wenn das Heizwasser nicht im Heizwasserkreislauf umläuft oder wenn das Heizwasser im Heizwasserkreislauf umläuft, Brauchwasser entnommen wird und die Temperatur des Kühlmediums bei Verlassen des Restwärmetauschers kleiner ist als die Temperatur des Heizwassers bei Eintritt in den Kühlmedium-Heizwasser-Wärmetauscher.

19. Verfahren nach einem der Ansprüche 16 oder 17, dadurch gekennzeichnet, daß ein als Kaltbrauchwasserspeicher ausgebildeter Kühlmedium-Brauchwasser-Wärmetauscher verwendet wird und daß der Betriebszustand B ausgewählt wird, wenn das Heizwasser nicht im Heizwasserkreislauf umläuft oder wenn das Heizwasser im Heizwasserkreislauf umläuft, Brauchwasser entnommen wird und die Temperatur des Kühlmediums bei Verlassen des Restwärmetauschers kleiner ist als die Temperatur des Heizwassers bei Eintritt in den Kühlmedium-Heizwasser-Wärmetauscher.

20. Verfahren nach einem der Ansprüche 6 bis 19, dadurch gekennzeichnet, daß der Satz von Betriebszuständen einen Betriebszustand C umfaßt, in dem das Kühlmedium im wesentlichen an dem Kühlmedium-Brauchwasser-Wärmetauscher vorbeigeführt wird.

21. Verfahren nach Anspruch 20, dadurch gekennzeichnet, daß in dem Betriebszustand C ein Sperrventil in einer Umgehungsleitung des Kühlmedium-Brauchwasser-Wärmetauschers geöffnet ist.

22. Verfahren nach einem der Ansprüche 20 oder 21, dadurch gekennzeichnet, daß der Betriebszustand C ausgewählt wird, wenn das Heizwasser im Heizwasserkreislauf umläuft, kein Brauchwasser entnommen wird und die Temperatur des Brauchwassers bei Verlassen des Kühlmedium-Brauchwasser-Wärmetauschers größer ist als die Temperatur des Heizwassers bei Eintritt in den Kühlmedium-Heizwasser-Wärmetauscher.

23. Verfahren nach einem der Ansprüche 20 oder 21, dadurch gekennzeichnet, daß ein als Kaltbrauchwasserspeicher ausgebildeter Kühlmedium-Brauchwasser-Wärmetauscher verwendet wird und daß der Betriebszustand C ausgewählt wird, wenn das Heizwasser im Heizwasserkreislauf umläuft, kein Brauchwasser entnommen wird und die mittlere Temperatur des Brauchwassers in dem Kaltbrauchwasserspeicher größer ist als die Temperatur des Heizwassers bei Eintritt in den Kühlmedium-Heizwasser-Wärmetauscher.

24. Verfahren nach einem der voranstehenden Ansprüche, dadurch gekennzeichnet, daß das Kühlmedium durch einen Kühlmedium-Heizwasser-Brauchwasser-Doppelwärmetauscher geführt wird, in dem das im Restwärmetauscher erwärmte Kühlmedium Wärme an Heizwasser in dem Heizwasserkreislauf abgibt, welches wiederum Wärme an Brauchwasser in der Brauchwasserzuführleitung abgibt.

25. Verfahren nach Anspruch 24, dadurch gekennzeichnet, daß in dem Kühlmedium-Heizwasser-Brauchwasser-Doppelwärmetauscher ein von einer Kühlmedium-Heizwasser-Wärmeübergangsfläche zu einer Heizwasser-Brauchwasser-Wärmeübergangsfläche weisender Temperaturgradient in dem Heizwasser erzeugt wird.

26. Verfahren nach einem der Ansprüche 24 oder 25, dadurch gekennzeichnet, daß in den Kühlmedium-Heizwasser-Brauchwasser-Doppelwärmetauscher eintretendem Heizwasser Impuls mittels eines Prallblechs entzogen wird.

27. Verfahren nach einem der voranstehenden Ansprüche, dadurch gekennzeichnet, daß als Kühlmedium in dem Restwärmetauscher aus dem Abgas der Feuerungsanlage kondensiertes Kondensat verwendet wird.

28. Vorrichtung zur Nutzung der restlichen fühlbaren und der latenten Wärme (Restwärme) eines Abgases einer Feuerungsanlage, umfassend einen von dem Abgas zur Abgabe von Wärme von dem Abgas an ein Kühlmedium durchströmten Restwärmetauscher und einen Kühlmedium-Heizwasser-Wärmetauscher zur Abgabe von Wärme von dem Kühlmedium an Heizwasser in einem Heizwasserkreislauf, dadurch gekennzeichnet, daß die Vorrichtung (30) eine Brauchwasserzuführleitung (166) und eine Einrichtung zur Übertragung von Wärme von dem Kühlmedium auf Brauchwasser in der Brauchwasserzuführleitung (166) umfaßt.

29. Vorrichtung nach Anspruch 28, dadurch gekennzeichnet, daß die Vorrichtung (30) einen Kühlmedium-Brauchwasser-Wärmetauscher (114) zur Abgabe von Wärme von dem Kühlmedium an das Brauchwasser in der Brauchwasserzuführleitung (166) umfaßt.

30. Vorrichtung nach Anspruch 29, dadurch gekennzeichnet, daß der Kühlmedium-Brauchwasser-Wärmetauscher (114) in Strömungsrichtung des Kühlmediums nach dem Kühlmedium-Heizwasser-Wärmetauscher (96) angeordnet ist.

31. Vorrichtung nach einem der Ansprüche 29 oder 30, dadurch gekennzeichnet, daß die Vorrichtung (30) einen Heizwasser-Brauchwasser-Wärmetauscher (160) zur Abgabe von Wärme von Heizwasser in einem Heizwasserkreislauf (152) an das Brauchwasser in der Brauchwasserzuführleitung (166) umfaßt.

32. Vorrichtung nach Anspruch 31, dadurch gekennzeichnet, daß der Heizwasser-Brauchwasser-Wärmetauscher (160) in Strömungsrichtung des Heizwassers durch den Heizwasserkreislauf (152) vor dem Kühlmedium-Heizwasser-Wärmetauscher (96) angeordnet ist.

33. Vorrichtung nach einem der Ansprüche 29 bis 32, dadurch gekennzeichnet, daß die Vorrichtung (30) Temperaturmesser zur Messung eines Satzes von Temperaturen, einen Sensor zum Feststellen einer Brauchwasserentnahme und eine Steuereinheit zur Ermittlung eines Betriebszustandes aus einem Satz von Betriebszuständen in Abhängigkeit von dem Satz von Temperaturen, vom Vorliegen einer Brauchwasserentnahme und vom Bestehen eines Heizwasserumlaufs in dem Heizwasserkreislauf (152) umfaßt.

34. Vorrichtung nach Anspruch 33, dadurch gekennzeichnet, daß die Vorrichtung (30) einen Temperaturmesser zur Messung der Temperatur des Kühlmediums bei Eintritt in den Restwärmetauscher (44) umfaßt.

35. Vorrichtung nach einem der Ansprüche 33 oder 34, dadurch gekennzeichnet, daß die Vorrichtung (30) einen Temperaturmesser zur Messung der Temperatur des Kühlmediums bei Verlassen des Restwärmetauschers (44) umfaßt.

36. Vorrichtung nach einem der Ansprüche 33 bis 35, dadurch gekennzeichnet, daß die Vorrichtung (30) einen Temperaturmesser zur Messung der Temperatur des Heizwassers bei Eintritt in den Kühlmedium-Heizwasser-Wärmetauscher (96) umfaßt.

37. Vorrichtung nach einem der Ansprüche 33 bis 36, dadurch gekennzeichnet, daß die Vorrichtung (30) einen Temperaturmesser zur Messung der Temperatur des Brauchwassers bei Verlassen des Kühlmedium-Brauchwasser-Wärmetauschers (114) umfaßt.

38. Vorrichtung nach einem der Ansprüche 33 bis 37, dadurch gekennzeichnet, daß der Kühlmedium-Brauchwasser-Wärmetauscher (114) als Kaltbrauchwasserspeicher ausgebildet ist und die Vorrichtung (30) einen Temperaturmesser zur Messung der mittleren Temperatur des Brauchwassers in dem Kaltbrauchwasserspeicher umfaßt.

39. Vorrichtung nach einem der Ansprüche 33 bis 38, dadurch gekennzeichnet, daß durch die Steuereinheit ein Betriebszustand A auswählbar ist, in dem das Kühlmedium durch den Kühlmedium-Heizwasser-Wärmetauscher (96) und durch den Kühlmedium-Brauchwasser-Wärmetauscher (114) hindurchführbar ist.

40. Vorrichtung nach Anspruch 39, dadurch gekennzeichnet, daß die Vorrichtung (30) eine Umgehungsleitung (108) für den Kühlmedium-Heizwasser-Wärmetauscher (96) mit einem im Betriebszustand A schließbaren Sperrventil (110) und eine Umgehungsleitung (120) für den Kühlmedium-Brauchwasser-Wärmetauscher (114) mit einem im Betriebszustand A schließbaren Sperrventil (122) umfaßt.

41. Vorrichtung nach einem der Ansprüche 39 oder 40, dadurch gekennzeichnet, daß der Betriebszustand A durch die Steuereinheit auswählbar ist, wenn das Heizwasser im Heizwasserkreislauf (152) umläuft, kein Brauchwasser entnommen wird und die Temperatur des Brauchwassers bei Verlassen des Kühlmedium-Brauchwasser-Wärmetauschers (114) kleiner ist als oder gleich groß ist wie die Temperatur des Heizwassers bei Eintritt in den Kühlmedium-Heizwasser-Wärmetauscher (96) oder wenn das Heizwasser im Heizwasserkreislauf (152) umläuft, Brauchwasser entnommen wird und die Temperatur des Kühlmediums bei Verlassen des Restwärmetauschers (44) größer ist als oder gleich groß ist wie die Temperatur des Heizwassers bei Eintritt in den Kühlmedium-Heizwasser-Wärmetauscher (96).

42. Vorrichtung nach einem der Ansprüche 39 oder 40, dadurch gekennzeichnet, daß der Kühlmedium-Brauchwasser-Wärmetauscher (114) als Kaltbrauchwasserspeicher ausgebildet ist und daß der Betriebszustand A durch die Steuereinheit auswählbar ist, wenn das Heizwasser im Heizwasserkreislauf (152) umläuft, kein Brauchwasser entnommen wird und die mittlere Temperatur des Brauchwassers in dem Kaltbrauchwasserspeicher kleiner ist als oder gleich groß ist wie die Temperatur des Heizwassers bei Eintritt in den Kühlmedium-Heizwasser-Wärmetauscher (96) oder wenn das Heizwasser im Heizwasserkreislauf (152) umläuft, Brauchwasser entnommen wird und die Temperatur des Kühlmediums bei Verlassen des Restwärmetauschers (44) größer ist als oder gleich groß ist wie die Temperatur des Heizwasers bei Eintritt in den Kühlmedium-Heizwasser-Wärmetauscher (96).

43. Vorrichtung nach einem der Ansprüche 33 bis 42, dadurch gekennzeichnet, daß durch die Steuereinheit ein Betriebszustand B auswählbar ist, in dem das Kühlmedium an dem Kühlmedium-Heizwasser-Wärmetauscher (96) vorbeiführbar ist.

44. Vorrichtung nach Anspruch 43, dadurch gekennzeichnet, daß die Vorrichtung (30) eine Umgehungsleitung (108) mit einem im Betriebszustand B öffnenbaren Sperrventil (108) umfaßt.

45. Vorrichtung nach einem der Ansprüche 43 oder 44, dadurch gekennzeichnet, daß der Betriebszustand B durch die Steuereinheit auswählbar ist, wenn das Heizwasser nicht im Heizwasserkreislauf (152) umläuft oder wenn das Heizwasser im Heizwasserkreislauf (152) umläuft, Brauchwasser entnommen wird und die Temperatur des Kühlmediums bei Verlassen des Restwärmetauschers (44) kleiner ist als die Temperatur des Heizwassers bei Eintritt in den Kühlmedium-Heizwasser-Wärmetauscher (96).

46. Vorrichtung nach einem der Ansprüche 43 oder 44, dadurch gekennzeichnet, daß der Kühlmedium-Brauchwasser-Wärmetauscher (114) als Kaltbrauchwasserspeicher ausgebildet ist und daß der Betriebszustand B durch die Steuereinheit auswählbar ist, wenn das Heizwasser nicht im Heizwasserkreislauf (152) umläuft oder wenn das Heizwasser im Heizwasserkreislauf (152) umläuft, Brauchwasser entnommen wird und die Temperatur des Kühlmediums bei Verlassen des Restwärmetauschers (44) kleiner ist als die Temperatur des Heizwassers bei Eintritt in den Kühlmedium-Heizwasser-Wärmetauscher (96).

47. Vorrichtung nach einem der Ansprüche 33 bis 46, dadurch gekennzeichnet, daß durch die Steuereinheit ein Betriebszustand C auswählbar ist, in dem das Kühlmedium an dem Kühlmedium-Brauchwasser-Wärmetauscher (114) vorbeiführbar ist.

48. Vorrichtung nach Anspruch 47, dadurch gekennzeichnet, daß die Vorrichtung (30) eine Umgehungsleitung (120) für den Kühlmedium-Brauchwasser-Wärmetauscher (114) mit einem im Betriebszustand C öffnenbaren Sperrventil (122) umfaßt.

49. Vorrichtung nach einem der Ansprüche 47 oder 48, dadurch gekennzeichnet, daß der Betriebszustand C durch die Steuereinheit auswählbar ist, wenn das Heizwasser im Heizwasserkreislauf (152) umläuft, kein Brauchwasser entnommen wird und die Temperatur des Brauchwassers bei Verlassen des Kühlmedium-Brauchwasser-Wärmetauschers (114) größer ist als die Temperatur des Heizwassers bei Eintritt in den Kühlmedium-Heizwasser-Wärmetauscher (96).

50. Vorrichtung nach einem der Ansprüche 47 oder 48, dadurch gekennzeichnet, daß der Kühlmedium-Brauchwasser-Wärmetauscher (114) als Kaltbrauchwasserspeicher ausgebildet ist und der Betriebszustand C durch die Steuereinheit auswählbar ist, wenn das Heizwasser im Heizwasserkreislauf (152) umläuft, kein Brauchwasser entnommen wird und die mittlere Temperatur des Brauchwassers in dem Kaltbrauchwasserspeicher größer ist als die Temperatur des Heizwassers bei Eintritt in den Kühlmedium-Heizwasser-Wärmetauscher (96).

51. Vorrichtung nach einem der Ansprüche 28 bis 50, dadurch gekennzeichnet, daß die Vorrichtung (30) einen Kühlmedium-Heizwasser-Brauchwasser-Doppelwärmetauscher (210) mit einer Kühlmedium-Heizwasser-Wärmeübergangsfläche und mit einer Heizwasser-Brauchwasser-Wärmeübergangsfläche umfaßt.

52. Vorrichtung nach Anspruch 51, dadurch gekennzeichnet, daß in dem Kühlmedium-Heizwasser-Brauchwasser-Doppelwärmetauscher (210) Heizwasser mit einem von der Kühlmedium-Heizwasser-Wärmeübergangsfläche zu der Heizwasser-Brauchwasser-Wärmeübergangsfläche weisenden Temperaturgradienten angeordnet ist.

53. Vorrichtung nach einem der Ansprüche 51 oder 52, dadurch gekennzeichnet, daß der Kühlmedium-Heizwasser-Brauchwasser-Doppelwärmetauscher (210) ein Prallblech (232) zur Verringerung eines Impulses von in den Kühlmedium-Heizwasser-Brauchwasser-Doppelwärmetauscher (210) eintretendem Heizwasser aufweist.

54. Vorrichtung nach einem der Ansprüche 28 bis 53, dadurch gekennzeichnet, daß in dem Restwärmetauscher (44) Wasserdampf aus dem Abgas der Feuerungsanlage (32) zu einem Kondensat kondensierbar ist.

FIG.1

EP 0 775 873 A1

# FIG.2

# FIG. 3

# FIG.4

# FIG.5

# FIG.6

FIG.7

FIG.8

# FIG. 9

# FIG. 10

FIG.11

FIG.12

FIG.13

FIG.14

FIG.15

## FIG.16

# FIG.17a

# FIG.17b

# FIG.17c

# FIG.17d

FIG.18

EP 0 775 873 A1

# FIG. 19

**Europäisches Patentamt**

# EUROPÄISCHER RECHERCHENBERICHT

Nummer der Anmeldung

EP 96 11 7406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 33 44 089 A (EBERL KARL;EBERL MARTIN) 20.Juni 1985 * Zusammenfassung * --- | 1,2,28, 29 | F24D12/02 F28C3/06 F24H1/10 F24D3/08 |
| X | DE 25 12 233 A (FROELING KESSEL BEHAELTER APPA) 30.September 1976 * Anspruch 1; Abbildungen * ----- | 1,28 | |

**RECHERCHIERTE SACHGEBIETE (Int.Cl.6)**

F24D
F28C
F24H
F28B

Der vorliegende Recherchenbericht wurde für alle Patentansprüche erstellt

| Recherchenort | Abschlußdatum der Recherche | Prüfer |
|---|---|---|
| DEN HAAG | 14.Februar 1997 | Van Gestel, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes Dokument

EPO FORM 1503 03.82 (P04C03)